# EUROPEAN PATENT APPLICATION

(11) **EP 1 413 724 A2**
(43) Date of publication of application: **28.04.2004**
(21) Application number: 03024461.0
(22) Date of filing: 23.10.2003
(51) Int. Cl.: F02D 35/00, F02D 41/02, F02D 41/00

(54) **Internal combustion engine control during gear shift**

(30) Priority: 25.10.2002 JP 2002310633; 26.12.2002 JP 2002378635
(71) Applicant: TOYOTA JIDOSHA KABUSHIKI KAISHA, Toyota-shi, Aichi 471-8571 (JP)
(72) Inventor: Matsushita, Tomohiko, Toyota-shi Aichi-ken 471-8571 (JP); Otsubo, Masaaki, Toyota-shi Aichi-ken 471-8571 (JP); Ohi, Takao, Toyota-shi Aichi-ken 471-8571 (JP); Negishi, Akiyoshi, Toyota-shi Aichi-ken 471-8571 (JP); Murakami, Kuniaki, Toyota-shi Aichi-ken 471-8571 (JP); Nishizawa, Jun, Toyota-shi Aichi-ken 471-8571 (JP)
(74) Representative: Leson, Thomas Johannes Alois, Dipl.-Ing.

(57) **Abstract**

A control system for an internal combustion engine (1) is provided which controls a fuel injection amount depending upon power requirement for the engine, and controls EGR amount adjusting means (12, 13) for adjusting an amount of exhaust gas recirculated from an exhaust passage (6) to an intake passage (2), based on the fuel injection amount. The control system includes clutch control means (15) for releasing and engaging a clutch mechanism (10) disposed between the engine and a transmission (9) upon shifting of the transmission, and torque control means (14) for reducing an engine output torque by temporarily reducing the fuel injection amount irrespective of the power requirement during shifting of the transmission. The control system further includes EGR control means (14) for controlling the EGR amount adjusting means based on the power requirement, instead of the fuel injection amount, during shifting of the transmission.

## Description

The invention relates to a control system for an internal combustion engine, such as a diesel engine, installed on a vehicle, such as an automobile.

Conventionally, the power of an internal combustion engine installed on a vehicle, such as an automobile, is adjusted based on an amount of depression of an accelerator pedal that is depressed by the driver of the automobile. The accelerator depression amount is a parameter that represents the magnitude of the power required to be generated by the engine, and the required engine power is obtained through adjustment of the power of the engine based on the accelerator depression amount. In diesel engines, for example, an amount of fuel injected into the engine is controlled based on the accelerator depression amount and other parameter(s), for adjustment of the power, so as to provide the required engine power.

In recent years, there has been a demand for enhancement of exhaust emissions of automobile engines, in particular, diesel engines, more specifically, a demand for a reduction of nitrogen oxides (NOx) contained in exhaust gases emitted from the engines. To fulfill this demand, technologies as disclosed in, for example, JP-A-63-94036, JP-A-2002-213264, JP-A-2002-147290, JP-A-8-240136 and JP-A-60-192870, have been proposed. As disclosed in these publications, exhaust gas is recirculated from an exhaust passage of the engine to an intake passage so that exhaust gas that does not contribute to combustion of fuel is present in a combustion chamber in which the fuel is burned with the aid of intake air, thereby lowering the combustion temperature and suppressing formation of nitrogen oxides (NOx).

The amount of the exhaust gas recirculated from the exhaust passage to the intake passage, which will be called "EGR amount", is controlled by adjusting an opening angle of an EGR valve disposed in an EGR passage through which the exhaust gas flows from the exhaust passage into the intake passage, and an opening angle of a throttle valve disposed in the intake passage. The EGR amount can be controlled in this manner because the cross-sectional area of the EGR passage is changed through adjustment of the opening angle of the EGR valve, and the pressure in the intake passage is changed through adjustment of the opening angle of the throttle valve, whereby a difference between the pressure in the exhaust passage and the pressure in the intake passage is changed.

Generally, the amount of NOx contained in exhaust gas can be reduced as the EGR amount increases. However, since the amount of exhaust gas present in the combustion chamber increases as the EGR amount increases, air is less likely to be drawn into the combustion chamber, resulting in a reduction in the intake air amount. If the intake air amount is excessively reduced relative to the fuel injection amount, fuel is burned with an insufficient amount of oxygen relative to the amount of the fuel, resulting in an increase in the amount of particulates (whose major component is soot) in the exhaust gas.

Accordingly, the EGR amount is controlled based on the fuel injection amount and other parameter(s), so as to ensure a sufficient amount of intake air relative to the fuel injection amount. Namely, the EGR amount is reduced as the fuel injection amount increases, and is increased as the fuel injection amount decreases. With the EGR amount thus controlled, it is possible to provide the maximum NOx reduction effect while assuring the intake air amount necessary for limiting the amount of the particulates in the exhaust gas to be equal to or smaller than its permissible value.

In the meantime, a transmission is coupled to the automobile engine via a clutch mechanism. When the transmission is shifted from one speed to another speed, the clutch mechanism is operated so as to temporarily cut off power transmission between the engine and the transmission. It has also been proposed to automatically releasing and engaging the clutch mechanism upon shifting of the transmission. While the clutch mechanism is in the released state and no power is transmitted between the engine and the transmission during shifting of the transmission, the resistance to rotation of the engine is reduced, and the engine speed may be excessively increased due to the reduced resistance. To avoid this situation, torque control is performed in which the fuel injection amount is temporarily reduced irrespective of the power requirement for the engine, so as to reduce the output torque of the engine, as disclosed in JP-A-60-94830, JP-A-10-329582 and JP-A-11-291795. With the torque control, even if the accelerator depression amount is kept at the same value or increased while the clutch is automatically placed in the released state during shifting of the transmission, the engine is prevented from racing, and the engine speed is prevented from being unnecessarily or undesirably increased.

If the fuel injection amount is temporarily reduced under the torque control as described above, the EGR amount, which is controlled based on the fuel injection amount, is temporarily increased. However, the following problem may occur because the EGR amount changes with a delay in response to a change in the fuel injection amount. Namely, when the fuel injection amount is increased to a value corresponding to the power requirement for the engine after being once reduced under the above torque control, it is difficult to change the EGR amount in accordance with the change (i.e., increase) in the fuel injection amount with high accuracy, because of the presence of the response delay.

Thus, when the fuel injection amount is increased after being once reduced, the EGR amount is reduced with a delay to a value suitable for the increased fuel injection amount, and the delay in the reduction of the EGR amount causes the EGR amount to be excessively large relative to the fuel injection amount. If the EGR amount becomes excessively large, the amount of air drawn into the combustion chamber is reduced by an amount corresponding to the excess EGR amount, and therefore the amount of air drawn into the engine becomes smaller than the required amount determined in relation to the fuel injection amount. Consequently, the fuel is burned with an insufficient amount of oxygen, and the amount of the particulates in the exhaust gas is inevitably increased.

In the meantime, in the diesel engine, at least one of the injection timing, the injection pressure and the boost pressure is adjusted in order to optimize the combustion state of the engine. The injection timing, the injection pressure and the boost pressure have close relationships with the fuel injection amount, and are determined based on the fuel injection amount.

Under the torque control as described above, the fuel injection amount is temporarily reduced, and is then returned to the value corresponding to the power requirement upon completion of shifting of the transmission. However, the injection timing, the injection pressure or the boost pressure changes with a delay in response to changes in the fuel injection amount. Accordingly, when the fuel injection amount is increased to the value corresponding to the power requirement for the engine after being once reduced under the torque control, it is difficult to change the injection timing, the injection pressure or the boost pressure in accordance with the change in the fuel injection amount with high accuracy. Therefore, some problems that are typical of the diesel engine occur due to the response delay in the injection timing, the injection pressure or the boost pressure. For example, if the injection timing is advanced as a countermeasure to prevent misfire, in response to the temporary reduction in the fuel injection amount under the torque control, large combustion noise may take place, or the amount of NOx produced may be increased.

Also, under normal injection pressure control, the injection pressure is temporarily lowered in response to the reduction in the fuel injection amount, and the fuel injected under the controlled injection pressure is less likely to be atomized. As a result, fuel particles are not entirely burned out, and the remaining fuel particles are discharged to the outside of the engine, resulting in an increase in the amount of particulates in the exhaust gas and occurrence of block smoke.

Furthermore, under normal boost pressure control, the boost pressure is temporarily reduced in response to the reduction in the fuel injection amount. When the fuel injection amount is increased after being once reduced, the boost pressure is raised, with a delay, to a value suitable for the increased fuel injection amount, and the amount of intake air drawn into the combustion chamber becomes smaller than the required amount determined in relation to the fuel injection amount. As a result, the fuel is burned with an insufficient amount of oxygen, and the amount of particulates in the exhaust gas is increased, resulting in occurrence of black smoke.

It is therefore a first object of the invention to provide a control system for an internal combustion engine installed on a vehicle, which system is able to prevent the amount of particulates in exhaust gas from increasing due to an excessively large amount of the EGR amount at the time of shifting of a transmission. It is a second object of the invention to provide a control system for a diesel engine, which is able to avoid or suppress typical problems of the diesel engine, such as black smoke and combustion noise, when torque control is performed during shifting of the transmission.

To accomplish the first object, there is provided according to a first aspect of the invention a control system for an internal combustion engine installed on a vehicle, which controls a fuel injection amount depending upon power requirement for the internal combustion engine, and controls EGR amount adjusting means for adjusting an amount of exhaust gas recirculated from an exhaust passage of the engine to an intake passage thereof, based on the fuel injection amount, characterized by comprising: (a) clutch control means for releasing and engaging a clutch mechanism disposed between the internal combustion engine and a transmission so that the engine and the transmission are automatically disconnected from and connected to each other, when the transmission is shifted from one speed to another speed, (b) torque control means for reducing an engine output torque by temporarily reducing the fuel injection amount irrespective of the power requirement during shifting of the transmission, and (c) EGR control means for controlling the EGR amount adjusting means based on the power requirement, instead of controlling the EGR amount adjusting means based on the fuel injection amount, during shifting of the transmission.

When the transmission is shifted from one speed to another speed, the fuel injection amount is once reduced irrespective of the power requirement for the engine, so that the engine speed is prevented from excessively increasing when the clutch mechanism is released at the time of shifting. After the shifting action of the transmission is finished, the fuel injection amount that has been reduced as described above is increased to a value corresponding to the power requirement for the engine, and the clutch mechanism starts being engaged so that the engine and the transmission are joined to each other with the rotational speeds thereof controlled to be equal to each other. In the control system as described above, since the EGR amount adjusting means is controlled based on the power requirement when the fuel injection amount is temporarily reduced during shifting of the transmission, the EGR amount (i.e., the amount of exhaust gas recirculated) is not changed in accordance with the reduction of the fuel injection amount. Accordingly, when the fuel injection amount is increased from the temporarily reduced value to the value corresponding to the power requirement for the engine, the EGR amount does not suffer from a response delay that would occur if the EGR amount were changed in response to the change in the fuel injection amount, and is thus prevented from becoming excessively large due to the response delay. Consequently, the intake air amount is not reduced due to the excess EGR amount, to be smaller than the required amount determined in relation to the fuel injection amount at the end of shifting of the transmission, and the fuel is burned with a sufficient amount of oxygen, thus suppressing an otherwise possible increase in the amount of particulates in the exhaust gas.

In the control system according to the first aspect of the invention, during shifting of the transmission, the EGR control means may calculate an estimated torque that is an output torque of the engine provided by a current operation of an accelerator pedal in a normal engine operation, based on an accelerator operation amount that represents the magnitude of the power requirement for the engine, and controls the EGR amount adjusting means based on the estimated torque.

The output torque of the internal combustion engine varies with the fuel injection amount. Therefore, the above-indicated estimated torque corresponds to the fuel injection amount that depends upon the power requirement for the engine, e.g., the accelerator operation amount, during shifting of the transmission. By controlling the EGR amount adjusting means based on the estimated torque, therefore, the EGR amount does not change in accordance with the temporary reduction of the fuel injection amount during shifting of the transmission.

According to a second aspect of the invention, there is provided a control system for an internal combustion engine installed on a vehicle, which controls a fuel injection amount depending upon power requirement for the internal combustion engine, and controls EGR amount adjusting means for adjusting an amount of exhaust gas recirculated from an exhaust passage of the engine to an intake passage thereof, based on the fuel injection amount, characterized by comprising: (a) clutch control means for releasing and engaging a clutch mechanism disposed between the internal combustion engine and a transmission so that the engine and the transmission are automatically disconnected from and connected to each other, when the transmission is shifted from one speed to another speed, (b) torque control means for reducing an engine output torque by temporarily reducing the fuel injection amount irrespective of the power requirement during shifting of the transmission, and (c) EGR control means for performing fixing control to fix the EGR amount adjusting means to an operating state established immediately before shifting of the transmission, instead of controlling the EGR amount adjusting means based on the fuel injection amount, during shifting of the transmission.

In the control system as described above, since the fixing control for fixing the EGR amount adjusting means to the operating state established immediately before shifting of the transmission is performed when the fuel injection amount is temporarily reduced during shifting of the transmission, the EGR amount is not changed in accordance with the temporary reduction of the fuel injection amount. When the fuel injection amount is increased from the reduced value to a value corresponding to the power requirement for the engine, therefore, the EGR amount does not suffer from a response delay that would occur if the EGR amount were changed in response to the change in the fuel injection amount, and is thus prevented from becoming excessively large due to the response delay. Consequently, the intake air amount is not reduced due to the excess EGR amount, to be smaller than the required amount determined in relation to the fuel injection amount at the end of shifting of the transmission, and the fuel is burned with a sufficient amount of oxygen, thus suppressing an otherwise possible increase in the amount of particulates in the exhaust gas.

According to a third aspect of the invention, there is provided a control system for an internal combustion engine installed on a vehicle, which controls a fuel injection amount depending upon power requirement for the internal combustion engine, and controls EGR amount adjusting means for adjusting an amount of exhaust gas recirculated from an exhaust passage of the engine to an intake passage thereof, based on the fuel injection amount, characterized by comprising: (a) clutch control means for releasing and engaging a clutch mechanism disposed between the internal combustion engine and a transmission so that the engine and the transmission are automatically disconnected from and connected to each other, when the transmission is shifted from one speed to another speed; (b) torque control means for reducing an engine output torque by temporarily reducing the fuel injection amount irrespective of the power requirement during shifting of the transmission; and (c) EGR control means for controlling the EGR amount adjusting means based on the engine output torque to be established immediately after shifting of the transmission, which torque is predicted from the power requirement for the engine and a shift pattern of the transmission, instead of controlling the EGR amount adjusting means based on the fuel injection amount, during shifting of the transmission.

In the control system as described above, since the EGR amount adjusting means is controlled based on the predicted value of the engine output torque to be established immediately after shifting when the fuel injection amount is temporarily reduced during shifting of the transmission, the EGR amount is not changed in accordance with the reduction of the fuel injection amount. When the fuel injection amount is increased from the reduced value to a value corresponding to the power requirement for the engine, therefore, the EGR amount does not suffer from a response delay that would occur if the EGR amount were changed in response to the change in the fuel injection amount, and is thus prevented from becoming excessively large due to the response delay. Consequently, the intake air amount is not reduced due to the excess EGR amount, to be smaller than the required amount determined in relation to the fuel injection amount at the end of shifting of the transmission, and the fuel is burned with a sufficient amount of oxygen, thus suppressing an otherwise possible increase in the amount of particulates in the exhaust gas.

In the control system according to the third aspect of the invention, during shifting of the transmission, the EGR control means may calculate an estimated torque that is an output torque of the engine provided by an operation of an accelerator pedal immediately before shifting in a normal engine operation, based on an accelerator operation amount that represents the magnitude of the power requirement, and predicts the engine output torque to be established immediately after shifting, based on the estimated torque and the shift pattern of the transmission.

The output torque of the internal combustion engine varies with the fuel injection amount. Therefore, the above-indicated estimated torque corresponds to the fuel injection amount that depends upon the power requirement for the engine, e.g., the accelerator operation amount, detected immediately before shifting of the transmission. Also, the predicted value of the engine output torque immediately after shifting, which value is obtained based on the estimated torque and the shift pattern of the transmission, corresponds to the fuel injection amount immediately after shifting, which depends upon the power requirement for the engine, e.g., the accelerator operation amount, immediately after shifting. By controlling the EGR amount adjusting means based on the predicted value of the output torque, therefore, the EGR amount is prevented from changing in accordance with the temporary reduction of the fuel injection amount during shifting of the transmission.

In the control system according to any one of the first through third aspects of the invention, the EGR amount adjusting means may be at least one of an EGR valve provided in an EGR passage through which the exhaust gas flows from the exhaust passage into the intake passage, and a throttle valve provided in the intake passage.

The EGR amount (i.e., the amount of the exhaust gas recirculated) is controlled through adjustment of the valve opening of at least one of the EGR valve and the throttle valve. The EGR amount can be controlled in this manner because the cross-sectional area of the EGR passage through which the exhaust gas flows is changed through adjustment of the opening angle of the EGR valve, and the pressure in the intake passage is changed through adjustment of the opening angle of the throttle valve, thus giving rise to a change in a difference between the pressure in the exhaust passage and the pressure in the intake passage. Thus, the control of the EGR amount during shifting of the transmission is performed by controlling the opening angle(s) of the EGR valve and/or the throttle valve, so that the EGR amount is prevented from becoming excessively large during shifting of the transmission.

The control system as described just above may further include correcting means for calculating a target intake air amount based on the fuel injection amount in a normal engine operation, and correcting an opening angle of at least one of the EGR valve and the throttle valve so that an actual intake air amount of the engine becomes close to the target intake air amount.

The intake air amount of the engine is controlled through adjustment of the valve opening(s) of at least one of the EGR valve and the throttle valve. The intake air amount can be controlled in this manner because the amount of the exhaust gas drawn into the combustion chamber is changed through adjustment of the opening angle of the EGR valve, and the cross-sectional area of the intake passage through which the air flows is changed through adjustment of the opening angle of the throttle valve. During a normal engine operation, the opening angles of the EGR valve and the throttle valve are corrected so that the actual intake air amount becomes close to the target intake air amount, thus ensuring a suitable amount of intake air that is determined in relation to the fuel injection amount. Assuming that the EGR valve and the throttle valve are driven in such directions as to increase the EGR amount in accordance with the temporary reduction of the fuel injection amount during shifting of the transmission, it takes a relatively long time to make the actual intake air amount equal to the target intake air amount after shifting of the transmission is finished, by correcting the opening angles of the EGR valve and the throttle valve. This is because the actual intake air amount obtained when the EGR valve and the throttle valve are driven in the directions to increase the EGR amount is greatly smaller than the target intake air amount to be established after completion of shifting of the transmission. With the control system constructed as described above, when the fuel injection amount is temporarily reduced during shifting of the transmission, the EGR valve and the throttle valve are not controlled based on the fuel injection amount so as to increase the EGR amount, and therefore the time required for making the actual intake air amount equal to the target intake air amount can be advantageously reduced.

In the control system as described just above, during shifting of the transmission, the correcting means may calculate an estimated torque that is an output torque of the engine provided by a current operation of an accelerator pedal in a normal engine operation, based on an accelerator operation amount that represents the magnitude of the power requirement for the engine, and may correct the opening angle of the at least one of the EGR valve and the throttle valve so that the actual intake air amount of the engine becomes close to the target intake air amount calculated based on the estimated torque.

The output torque of the engine varies with the fuel injection amount. Therefore, the above-indicated estimated torque corresponds to the fuel injection amount that depends upon the power requirement for the engine, e.g., the accelerator operation amount, during shifting of the transmission. By correcting the opening angles of the EGR valve and the throttle valve during shifting of the transmission so that the actual intake air amount becomes close to the target intake air amount calculated based on the estimated torque, the actual intake air amount can be made equal to the target intake air amount within a relatively short time after completion of shifting of the transmission. This is because the actual intake amount obtained when the opening angles of the EGR valve and the throttle valve are corrected during shifting of the transmission is close to the target intake air amount to be achieved after completion of shifting of the transmission.

In the control system according to any one of the first through third aspects of the invention, the transmission may be automatically shifted up or down depending upon an operating condition of the vehicle, and the EGR control means may start controlling the EGR amount adjusting means when a request for shifting of the transmission is made.

When the transmission adapted to be automatically shifted depending upon the operating condition of the vehicle is requested to be shifted up or down, the EGR control means starts controlling the EGR amount adjusting means so as to prevent the EGR amount from being excessively large during shifting of the transmission. Thus, in the case where the transmission capable of automatic shifting is employed in the vehicle, the control system enables the EGR control means to accurately start the control of the EGR amount adjusting means so as to suppress or avoid an excessive increase in the EGR amount.

In the control system according to any one of the first through third aspects of the invention, the transmission may be shifted up or down according to a shifting operation of a driver of the vehicle, and the EGR control means may start controlling the EGR amount adjusting means when a request for shifting of the transmission is made.

When the transmission adapted to be manually shifted according to a shifting operation of the driver is requested to be shifted up or down, the EGR control means starts controlling the EGR amount adjusting means so as to prevent the EGR amount from being excessively large during shifting of the transmission. Thus, in the case where the transmission capable of manual shifting is employed in the vehicle, too, the control system enables the EGR control means to accurately start the control of the EGR amount adjusting means so as to suppress or avoid an excessive increase in the EGR amount.

To accomplish the second object of the invention, there is provided according to a fourth aspect of the invention a control system for a diesel engine, comprising (a) control means for controlling a fuel injection amount depending upon power requirement for the diesel engine, and controlling adjusting means for adjusting a quantity of state for optimizing a combustion state of the diesel engine, based on the fuel injection amount, (b) clutch control means for releasing and engaging a clutch mechanism disposed between the diesel engine and a transmission so that the diesel engine and the transmission are automatically disconnected from and connected to each other, when the transmission is shifted from one speed to another speed, and (c) torque control means for reducing an engine output torque by temporarily reducing the fuel injection amount irrespective of the power requirement during shifting of the transmission, characterized by further comprising (d) shifting-time control means for controlling the adjusting means based on the power requirement, instead of controlling the adjusting means based on the fuel injection amount, during shifting of the transmission.

When the transmission is shifted from one speed to another speed, the fuel injection amount is once reduced irrespective of the power requirement for the engine, so that the engine speed is prevented from excessively increasing when the clutch mechanism is released at the time of shifting. After the shifting action of the transmission is finished, the fuel injection amount that has been reduced as described above is increased to a value corresponding to the power requirement for the engine, and the clutch mechanism starts being engaged so that the engine and the transmission are joined to each other with the rotational speeds thereof controlled to be equal to each other. In the control system as described above, the adjusting means is controlled based on the power requirement when the fuel injection amount is temporarily reduced during shifting of the transmission, and therefore the state quantity for optimizing combustion is not changed in accordance with the reduction of the fuel injection amount. When the fuel injection amount is increased from the temporarily reduced value to the value corresponding to the power requirement for the engine, therefore, the quantity of state does not suffer from a response delay that would occur if the quantity of state were changed in response to the change in the fuel injection amount. Accordingly, the combustion state is prevented from deteriorating during shifting of the transmission.

In the control system according to the fourth aspect of the invention, during shifting of the transmission, the shifting-time control means may calculate an estimated torque that is an output torque of the engine provided by a current operation of an accelerator pedal in a normal engine operation, based on an accelerator operation amount that represents the magnitude of the power requirement for the diesel engine, and may control the adjusting means based on the estimated torque.

The output torque of the diesel engine varies with the fuel injection amount. Therefore, the above-indicated estimated torque corresponds to the fuel injection amount that depends upon the power requirement for the engine, e.g., the accelerator operation amount, during shifting of the transmission. By controlling the adjusting means based on the estimated torque, therefore, the quantity of state for optimizing combustion is not changed in response to the temporary reduction of the fuel injection amount during shifting of the transmission.

According to a fifth aspect of the invention, there is provided a control system for a diesel engine, comprising (a) control means for controlling a fuel injection amount depending upon power requirement for the diesel engine, and controlling adjusting means for adjusting a quantity of state for optimizing a combustion state of the diesel engine, based on the fuel injection amount, (b) clutch control means for releasing and engaging a clutch mechanism disposed between the diesel engine and a transmission so that the diesel engine and the transmission are automatically disconnected from and connected to each other, when the transmission is shifted from one speed to another speed, and (c) torque control means for reducing an engine output torque by temporarily reducing the fuel injection amount irrespective of the power requirement during shifting of the transmission, characterized by further comprising (d) shifting-time control means for performing fixing control to fix the adjusting means to an operating state established immediately before shifting of the transmission, instead of controlling the adjusting means based on the fuel injection amount, during shifting of the transmission.

In the control system as described above, the fixing control for fixing the adjusting means to the operating state established immediately before shifting of the transmission is performed when the fuel injection amount is temporarily reduced during shifting of the transmission, and therefore the quantity of state for optimizing combustion is not changed in response to the reduction of the fuel injection amount. When the fuel injection amount is increased from the temporarily reduced value to a value corresponding to the power requirement for the engine, therefore, the quantity of state does not suffer from a response delay that would occur if the quantity of state were changed in response to the change in the fuel injection amount. Accordingly, the combustion state is prevented from deteriorating during shifting of the transmission.

According to a sixth aspect of the invention, there is provided a control system for a diesel engine, comprising (a) control means for controlling a fuel injection amount depending upon power requirement for the diesel engine, and controlling adjusting means for adjusting a quantity of state for optimizing a combustion state of the diesel engine, based on the fuel injection amount, (b) clutch control means for releasing and engaging a clutch mechanism disposed between the diesel engine and a transmission so that the diesel engine and the transmission are automatically disconnected from and connected to each other, when the transmission is shifted from one speed to another speed, and (c) torque control means for reducing an engine output torque by temporarily reducing the fuel injection amount irrespective of the power requirement during shifting of the transmission, characterized by further comprising (d) shifting-time control means for controlling the adjusting means based on the output torque of the diesel engine to be established immediately after shifting of the transmission, which torque is predicted from the power requirement for the diesel engine and a shift pattern of the transmission, instead of controlling the adjusting means based on the fuel injection amount, during shifting of the transmission.

In the control system as described above, the adjusting means is controlled based on the predicted value of the engine output torque immediately after shifting when the fuel injection amount is temporarily reduced during shifting of the transmission, and therefore the quantity of state for optimizing combustion is not changed in accordance with the reduction of the fuel injection amount. When the fuel injection amount is increased from the temporarily reduced value to a value corresponding to the power requirement for the engine therefore, the quantity of state does not suffer from a response delay that would occur if it were changed in response to the change in the fuel injection amount. Accordingly, the combustion state is prevented from deteriorating during shifting of the transmission.

In the control system as described just above, during shifting of the transmission, the shifting-time control means may calculate an estimated torque that is an output torque of the diesel engine provided by an operation of an accelerator pedal immediately before shifting in a normal engine operation, based on an accelerator operation amount that represents the magnitude of the power requirement for the diesel engine, and may predict the engine output torque to be established immediately after shifting of the transmission, based on the estimated torque and the shift pattern of the transmission.

The output torque of the diesel engine varies with the fuel injection amount. Therefore, the above-indicated estimated torque corresponds to the fuel injection amount that depends upon the power requirement for the engine, i.e., the accelerator operation amount, detected immediately before shifting of the transmission. Also, the predicted value of the engine output torque immediately after shifting, which value is obtained based on the estimated torque and the shift pattern of the transmission, corresponds to the fuel injection amount immediately after shifting, which depends upon the power requirement for the engine that is represented by the accelerator operation amount immediately after shifting. By controlling the adjusting means based on the predicted value of the output torque, therefore, the quantity of state for optimizing combustion is not changed in accordance with the temporary reduction of the fuel injection amount during shifting of the transmission.

In the control system according to any one of the fourth through sixth aspects of the invention, the adjusting means may include at least one of an accumulator device that stores an injection pressure of a fuel to be injected into the diesel engine, a fuel injector operable to inject the fuel into the diesel engine, and a supercharger operable to supply intake air to the diesel engine at a controlled boost pressure.

Examples of the quantity of state of the diesel engine include the injection pressure, injection timing and the boost pressure of the intake air. The injection pressure is controlled through adjustment of the accumulator device. The injection timing is controlled through adjustment of the valve opening timing of fuel injectors of the engine. The boost pressure is controlled through adjustment of the supercharger. By controlling the accumulator device, fuel injectors and the supercharger, the quantities of state are prevented from changing by large degrees during shifting of the transmission.

In the control system according to any one of the fourth through sixth aspects of the invention, the transmission may be automatically shifted up or down depending upon an operating condition of the vehicle, and the shifting-time control means may start controlling the adjusting means so as to adjust at least one of an injection pressure, injection timing and a boost pressure when a request for shifting of the transmission is made.

When the transmission adapted to be automatically shifted depending upon the operating condition of the vehicle is requested to be shifted up or down, the shifting-time control means starts controlling the adjusting means so as to prevent the quantity of state from changing by an excessively large degree during shifting of the transmission. Thus, in the case where the transmission capable of automatic shifting is employed in the vehicle, the control system enables the shifting-time control means to accurately start the control of the adjusting means so as to suppress or avoid an excessively large change in the quantity of state.

In the control system according to any one of the fourth through sixth aspects of the invention, the transmission may be shifted up or down according to a shifting operation of a driver of the vehicle, and the shifting-time control means may start controlling the adjusting means so as to adjust at least one of an injection pressure, injection timing and a boost pressure when a request for shifting of the transmission is made.

When the transmission adapted to be manually shifted according to a shifting operation of the driver is requested to be shifted up or down, the shifting-time control means starts controlling the adjusting means so as to prevent the quantity of state from changing by an excessively large degree during shifting of the transmission. Thus, in the case where the transmission capable of manual shifting is employed in the vehicle, the control system enables the shifting-time control means to accurately start the control of the adjusting means so as to suppress or avoid an excessively large change in the quantity of state.

The foregoing and/or further objects, features and advantages of the invention will become more apparent from the following description of preferred embodiments with reference to the accompanying drawings, in which like numerals are used to represent like elements and wherein:
FIG. 1 is a schematic view showing a system including a diesel engine to which a control system according to a first embodiment of the invention is applied;
FIG. 2A through FIG. 2H are time charts used for explaining various controls of the diesel engine, a clutch mechanism and a transmission at the time of shifting of the transmission according to the first embodiment;
FIG. 3 is a flowchart showing a part of a procedure of calculating an EGR opening command value and a throttle opening command value according to the first embodiment;
FIG. 4 is a flowchart showing another part of the procedure of calculating the EGR opening command value and the throttle opening command value according to the first embodiment;
FIG. 5 is a map used for calculation of the throttle opening command value;
FIG. 6 is a map used for calculation of the EGR opening command value;
FIG. 7A through FIG. 7H are time charts used for explaining various controls of the diesel engine, clutch mechanism and the transmission at the time of shifting of the transmission according to a second embodiment of the invention;
FIG. 8 is a flowchart showing a part of a procedure of calculating an EGR opening command value and a throttle opening command value according to the second embodiment, which part is different from that of the first embodiment;
FIG. 9A through FIG. 9H are time charts used for explaining various controls of the diesel engine, clutch mechanism and the transmission at the time of shifting of the transmission according to a third embodiment of the invention;
FIG. 10 is a flowchart showing a part of a procedure of calculating an EGR opening command value and a throttle opening command value according to the third embodiment, which part is different from that of the first embodiment;
FIG. 11 is a schematic view showing a system including a diesel engine to which a control system according to a fourth embodiment of the invention is applied;
FIG. 12A through FIG. 12H are time charts used for explaining various controls of the diesel engine, a clutch mechanism and a transmission at the time of shifting of the transmission according to the fourth embodiment;
FIG. 13 is a flowchart showing a part of a command value calculating routine for calculating an injection pressure command value, an injection timing command value and a boost pressure command value according to the fourth embodiment;
FIG. 14 is a flowchart showing another part of the command value calculating routine according to the fourth embodiment;
FIG. 15 is a map used for calculation of the injection pressure command value;
FIG. 16 is a map used for calculation of the injection timing command value;
FIG. 17 is a map used for calculation of the VNT opening command value;
FIG. 18A through FIG. 18H are time charts used for explaining various controls of the diesel engine, clutch mechanism and the transmission at the time of shifting of the transmission according to a fifth embodiment of the invention;
FIG. 19 is a flowchart showing a part of a command value calculating routine according to the fifth embodiment;
FIG. 20A through FIG. 20H are time charts used for explaining various controls of the diesel engine, clutch mechanism and the transmission at the time of shifting of the transmission according to a sixth embodiment of the invention;
FIG. 21 is a flowchart showing a part of a command value calculating routine according to the sixth embodiment; and
FIG. 22A through FIG. 22H are time charts used for explaining various controls of the diesel engine, clutch mechanism and the transmission at the time of shifting of the transmission according to a seventh embodiment of the invention.

### First Embodiment

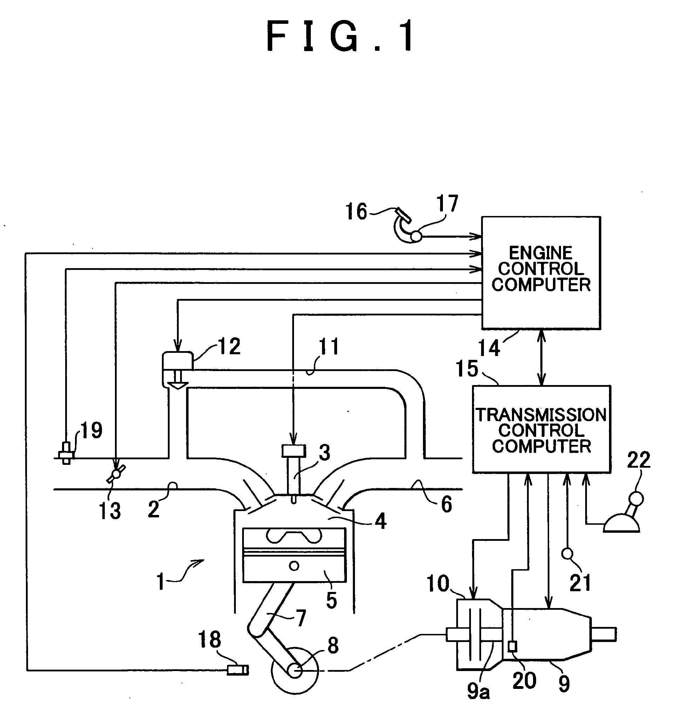

Referring to FIG. 1 through FIG. 6, a control system according to a first embodiment of the invention, which is applied to a diesel engine of an automobile, will be described in detail.

In the diesel engine shown in FIG. 1, air passing through an intake passage 2 and fuel injected from a fuel injector 3 are supplied to a combustion chamber 4, so that a piston 5 is reciprocated with combustion energy generated when the fuel is burned. Exhaust gas produced in the combustion chamber 4 after combustion of the fuel is fed into an exhaust passage 6. The reciprocation of the piston 5 is converted by a connecting rod 7 into rotation of a crankshaft 8 that serves as an output shaft of the diesel engine 1. The rotation of the crankshaft 8 is then transmitted to wheels (not shown) of the automobile via a transmission 9 and other components.

The transmission 9 has two or more speeds or gear positions, for example, first through fifth speeds, and is shifted from one speed to another speed in accordance with the running state (operating state) of the vehicle or a request made by the driver. An input shaft 9a of the transmission 9 and the crankshaft 8 of the diesel engine 1 are coupled to each other via a clutch mechanism 10 that is operable to connect or disconnect the input shaft 9a with or from the crankshaft 8. When the transmission 9 is shifted from one speed to another speed, the clutch mechanism 10 is initially released so that no rotary power is transmitted between the diesel engine 1 and the transmission 9, and shifting of the transmission 9 is performed in this condition. After shifting, the clutch mechanism 10 is engaged again to connect the input shaft 9a with the crankshaft 8.

The diesel engine 1 is provided with an EGR passage 11 through which the exhaust gas in the exhaust passage 6 flows into the intake passage 2. The recirculation of the exhaust gas from the exhaust passage 6 into the intake passage 2 through the EGR passage 11 is carried out in order to lower the combustion temperature of the fuel in the combustion chamber 4, for example, thereby to suppress generation of nitrogen oxides (NOx) and reduce NOx emissions of the diesel engine 1.

The amount of the exhaust gas thus recirculated (which will be called "EGR amount") is controlled by adjusting the opening angle of an EGR valve 12 disposed in the EGR passage 11, and adjusting the opening angle of a throttle valve 13 disposed in the intake passage 2. The EGR amount can be controlled in this manner because the cross-sectional area of the EGR passage 11 through which the exhaust gas passes changes through adjustment of the opening angle of the EGR valve 12, and the pressure in the intake passage 2 changes through adjustment of the opening angle of the throttle valve 13, which results in a change in a difference between the pressure in the exhaust passage 6 and the pressure in the intake passage 2.

Next, an electric arrangement of the control system of the diesel engine 1 will be described.

The control system includes an engine control computer 14 and a transmission control computer 15 that are installed in the automobile. The engine control computer 14 controls the diesel engine 1, for example, controls the fuel injection amount in the diesel engine 1, the opening angle of the EGR valve 12 and the opening angle of the throttle valve 13. The transmission control computer 15 controls driving of the transmission 9 and the clutch mechanism 10. The engine control computer 14 and the transmission control computer 15 are connected to each other such that data can be transmitted between these computers 14, 15.

The engine control computer 14 receives various signals, which include: (a) a detection signal from an accelerator position sensor 17 that senses an amount of depression of an accelerator pedal 16 operated by the driver of the automobile, (b) a detection signal from a crank position sensor 18 that outputs a signal indicative of the position or angle of the rotating crankshaft 8, and (c) a detection signal from an air flow meter 19 that senses the air mass flow, i.e., the amount of intake air that passes through the intake passage 2.

In the diesel engine 1, the engine control computer 14 controls the fuel injection amount, thereby to adjust the output torque. The control of the fuel injection quantity is performed by driving the fuel injector 3 in a controlled manner based on a fuel injection amount command value Qfin that is calculated based on an accelerator depression amount ACCP, an engine speed NE and other parameter(s). The accelerator depression amount ACCP is determined based on the detection signal from the accelerator position sensor 17, and the engine speed NE is determined based on the detection signal from the crank position sensor 18.

By driving the fuel injector 3 under control of the engine control computer 14, fuel is injected in an amount corresponding to the fuel injection amount command value Qfin, so that the output torque of the diesel engine 1 is adjusted as desired. The accelerator depression amount ACCP used for calculation of the fuel injection amount command value Qfin is a parameter that represents a request made by the driver for running the vehicle, in other words, the power required to be generated by the diesel engine 1. With the fuel injection amount thus controlled based on the fuel injection amount command value Qfin, the output torque of the diesel engine 1 is adjusted so as to provide the required output torque that meets the request of the driver.

Also, the engine control computer 14 controls the EGR amount by adjusting the opening angles of the EGR valve 12 and the throttle valve 13. As the EGR amount increases, NOx contained in the exhaust gas decreases. It is, however, to be noted that the amount of the exhaust gas present in the combustion chamber 4 increases with an increase in the EGR amount, and therefore the air is less likely to be drawn from the intake passage 2 into the combustion chamber 4, resulting in a reduction in the intake air amount. If the intake air amount is excessively reduced relative to the fuel injection amount, the fuel is burned with an insufficient amount of oxygen relative to the amount of the fuel, resulting in an increase in the amount of particulates (containing soot as a main component) in the exhaust gas.

Accordingly, the adjustment of the opening angles of the EGR valve 12 and the throttle valve 13 for the purpose of controlling the EGR amount is performed based on the fuel injection amount command value Qfin and so forth, so as to ensure a sufficient amount of the intake air relative to the fuel injection amount.

More specifically, an EGR opening command value Et used for the opening control of the EGR valve 12 and a throttle opening command value TAt used for the opening control of the throttle valve 13 are calculated based on the fuel injection amount command value Qfin and the engine speed NE. Under a condition that the engine speed NE is constant, the EGR opening command value Et is reduced as the fuel injection amount command value Qfin increases, and is increased as the fuel injection amount command value Qfin decreases. Under the condition that the engine speed NE is constant, the throttle opening command value TAt is increased as the fuel injection amount command value Qfin increases, and is reduced as the fuel injection amount command value Qfin decreases.

Under control of the engine control computer 14, the EGR valve 12 is driven based on the EGR opening command value Et, and the throttle valve 13 is driven based on the throttle opening command value TAt, for adjustment of the valve openings of the EGR valve 12 and the throttle valve 13. In this manner, the EGR amount is reduced as the fuel injection amount command value Qfin increases, and is increased as the fuel injection amount command value Qfin decreases, so as to provide the maximum EGR amount with which the intake air amount is not excessively reduced relative to the fuel injection amount (fuel injection amount command value Qfin).

With the EGR amount thus controlled, the diesel engine 1 is able to provide the maximum NOx reduction effect while ensuring a sufficient intake air amount required for limiting the amount of particulates in the exhaust gas to be equal to or smaller than its permissible value.

In the diesel engine 1, feedback control of the intake air amount is also performed so as to ensure the required intake air amount with even higher reliability. The feedback control is realized by correcting the valve openings of the EGR valve 12 and the throttle valve 13 so that the actual intake air amount GAr determined based on the detection signal from the air flow meter 19 becomes close to a target intake air amount GAt that is required for limiting the amount of particulates to be equal to or smaller than the permissible value.

By executing the above-described feedback control, the actual intake air amount GAr of the diesel engine 1 is eventually made equal to the target intake air amount GAt. The intake air amount can be controlled through adjustment of the opening angles of the EGR valve 12 and the throttle valve 13, because the amount of the exhaust gas drawn into the combustion chamber 4 is changed through adjustment of the opening angle of the EGR valve 12, and the cross-sectional area of the intake passage 2 through which the air passes is changed through adjustment of the opening angle of the throttle valve 13.

The transmission control computer 15 receives various signals, which include: (a) a signal from an input rotational speed sensor 20 that senses the speed of rotation of the input shaft 9a of the transmission 9, (b) a detection signal from a vehicle speed sensor 21 that senses the vehicle speed of the automobile, and (c) a signal indicative of the position to which a shift lever 22 is operated by the driver.

The shift lever 22 is used for switching a shift mode established upon shifting, such as upshifting or downshifting, of the transmission 9, between an automatic mode in which the transmission 9 is automatically shifted up or down in accordance with the running state of the vehicle and the power requested by the driver, and a manual mode in which the transmission 9 is shifted up or down based on an operation of the shift lever 22 by the driver. In the automatic mode, shifting of the transmission 9 is performed based on the vehicle speed obtained from the detection signal received from the vehicle speed sensor 21, and the accelerator depression amount ACCP. In the manual mode, shifting of the transmission 9 is performed through a shifting operation performed by the driver on the shift lever 22, i.e., manipulation of the shift lever 22 by the driver.

The transmission control computer 15 performs shifting of the transmission 9 based on changes in the driving state, such as the vehicle speed and the accelerator depression amount ACCP, in the automatic mode, or based on the shifting operation of the shift lever 22 in the manual mode. At the time of shifting, a signal indicating the presence of a request for shifting and a signal (shift signal) corresponding to shift information indicative of which of the speeds the transmission 9 is shifted from and is shifted to are transmitted from the transmission control computer 15 to the engine control computer 14. The information indicative of the speed from which the transmission 9 is shifted and the speed to which the transmission 9 is shifted will be hereinafter called "shift pattern".

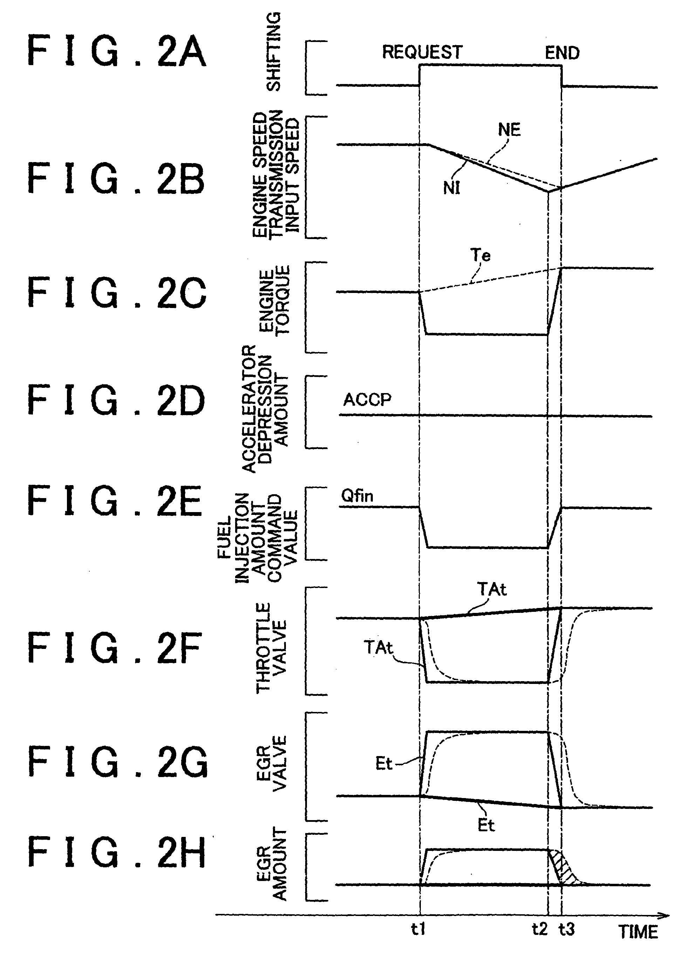

Next, various controls of the diesel engine 1, clutch mechanism 10 and the transmission 9 performed upon shifting of the transmission 9 will be explained with reference to the time chart of FIG. 2A through FIG. 2H.

The transmission control computer 15 controls driving of the clutch mechanism 10, for automatic engagement and disengagement of the clutch mechanism 10, so that no rotary power is transmitted between the diesel engine 1 and the transmission 9 during shifting of the transmission 9.

More specifically, prior to a start of a shifting action of the transmission 9, the clutch mechanism 10 is released, for example, when a request for shifting is made as shown in FIG. 2A, so that power transmission between the diesel engine 1 and the transmission 9 is temporarily cut off at time t1. In this condition, the transmission 9 is shifted up or down from one speed to another speed. Since the resistance to rotation of the diesel engine 1 is reduced while the clutch mechanism 10 is being released, the fuel injection amount is temporarily reduced irrespective of the power requirement for the diesel engine 1, so that the engine speed NE is prevented from excessively increasing due to the reduced resistance. In this manner, torque control for reducing the output torque of the engine 1 is performed.

The fuel injection amount is reduced for the torque control by reducing the fuel injection amount command value Qfin that is normally calculated based on, for example, the accelerator depression amount ACCP (indicative of the power requirement), down to a predetermined value as shown in FIG. 2E, irrespective of the accelerator depression amount ACCP shown in FIG. 2D. As the predetermined value is preferably employed, for example, a value that makes the output torque of the diesel engine 1 equal to "0Nm". By reducing the fuel injection amount command value Qfin as described above, the fuel injection amount of the diesel engine 1 is reduced so that the output torque of the engine 1 is reduced as indicated by the solid line in FIG. 2C.

With the above torque control thus executed, the engine speed NE detected while the clutch mechanism 10 is being released is gradually lowered as indicated by the broken line in FIG. 2B. Also, the input rotational speed NI, which is the speed of rotation of the input shaft 9a of the transmission 9, varies depending upon the shift pattern of the transmission 9, after release of the clutch mechanism 10. The input rotational speed NI is determined based on the detection signal from the input rotational speed sensor 20. The solid line in FIG. 2B indicates the progression of the input rotational speed NI when the transmission 9 is shifted up. In this case, the input rotational speed NI gradually decreases in accordance with a change in the gear ratio of the transmission 9 resulting from upshifting, after release of the clutch mechanism 10.

When the shifting action for shifting up the transmission 9 is completed at time t2, the fuel injection amount command value Qfin is gradually increased as shown in FIG. 2E, toward a value corresponding to the accelerator depression amount ACCP (i.e., the power requirement) and the engine speed NE, and the fuel injection amount is gradually increased. At the same time, the clutch mechanism 10 starts being engaged. As a result, the engine speed NE and the input rotational speed NI are made equal to each other, and the crankshaft 8 and the input shaft 9a are coupled to each other through engagement of the clutch mechanism 10 at time t3. With this coupling, shifting (upshifting in this case) of the transmission 9 is finished at time t3.

When the fuel injection amount is temporarily reduced for the torque control as described above, the fuel injection amount command value Qfin is reduced down to the predetermined value irrespective of the accelerator depression amount ACCP (or the power requirement), and is subsequently increased to the value corresponding to the accelerator depression amount ACCP. This fuel injection amount command value Qfin is normally used for calculating the EGR opening command value Et and the throttle opening command value TAt.

If the fuel injection amount command value Qfin is temporarily reduced, therefore, the EGR opening command value Et is temporarily increased as indicated by the thin solid line in FIG. 2G, and the throttle opening command value TAt is temporarily reduced as indicated by the thin solid line in FIG. 2F. As a result, the EGR valve 12 is driven in a valve opening direction to temporarily increase the EGR amount as indicated by the broken line in FIG. 2G, and the throttle valve 13 is driven in a valve closing direction to temporarily increase the EGR amount as indicated by the broken line in FIG. 2F.

With the above-described opening control of the EGR valve 12 and the throttle valve 13, the EGR amount is temporarily increased in response to the temporary reduction of the fuel injection amount command value Qfin. Although the EGR amount ideally changes in accordance with changes in the fuel injection amount command value Qfin as indicated by the thin solid line in FIG. 2H, the EGR amount actually changes with a response delay, as indicated by the broken line in FIG. 2H, relative to changes in the fuel injection amount command value Qfin.

The above situation occurs because, for example, the opening/closing actions of the EGR valve 12 and the throttle valve 13 involve response delays as indicated by the broken lines in FIG. 2G and FIG. 2F even if the EGR opening command value Et and the throttle opening command value TAt quickly change in response to changes in the fuel injection amount command value Qfin. In addition, the EGR amount actually changes with a response delay relative to the opening/closing actions of the EGR valve 12 and the throttle valve 13, thus causing a further response delay with which the EGR amount changes in response to temporary changes in the fuel injection amount command value Qfin.

If the EGR amount changes with the response delay as described above, it becomes difficult to change the EGR amount in accordance with a change in the fuel injection amount with high accuracy when the fuel injection amount is increased toward the value corresponding to the accelerator depression amount ACCP after being once reduced for the torque control. Therefore, when the fuel injection amount is increased after being once reduced as described above, the EGR amount is reduced with a delay to a value suited for the increased fuel injection amount, resulting in an excess of the EGR amount corresponding to the hatched area in FIG. 2H, over an amount commensurate to the fuel injection amount. If the EGR amount becomes excessively large, the amount of the air that can be drawn into the combustion chamber 4 is reduced by an amount corresponding to the excess EGR amount, and the intake air amount of the diesel engine 1 becomes smaller than the required amount determined based on the fuel injection amount. Consequently, the fuel is burned with an insufficient amount of oxygen, inevitably resulting in an increase in the amount of particulates in the exhaust gas.

To solve the above-described problem, according to the first embodiment, the EGR opening command value Et and the throttle opening command value TAt are calculated based on the accelerator depression amount ACCP (i.e., the power requirement) and so forth, instead of calculating these values Et, TAt based on the fuel injection amount command value Qfin and so forth, during shifting of the transmission 9.

More specifically, the output torque that would be obtained by the accelerator depression amount ACCP (or the power requirement) in a normal engine operation is initially calculated as estimated torque Te, based on the accelerator depression amount ACCP and the engine speed NE detected at the time of shifting. The estimated torque Te thus calculated is kept substantially constant as indicated by the broken line in FIG. 2C when the fuel injection amount is temporarily reduced. On the basis of the estimated torque Te and the engine speed NE, the EGR opening command value Et and the throttle opening command value TAt are calculated.

As a result, the EGR opening command value Et is kept substantially constant as indicated by the thick solid line in FIG. 2G in accordance with, for example, the estimated torque Te, and the throttle opening command value TAt is kept substantially constant as indicated by the thick solid line in FIG. 2F in accordance with, for example, the estimated torque Te. Accordingly, the opening angle of the EGR valve 12 that is controlled based on the EGR opening command value Et is kept substantially constant in accordance with the progression of the EGR opening command value Et, and the opening angle of the throttle valve 13 that is controlled based on the throttle opening command value TAt is kept substantially constant in accordance with the progression of the throttle opening command value TAt.

Thus, when the fuel injection amount is temporarily reduced during shifting of the transmission 9, the opening angles of the EGR valve 12 and the throttle valve 13 are kept substantially constant without being changed in directions to temporarily reduce the EGR amount in accordance with the reduction of the fuel injection amount, and the EGR amount is also kept substantially constant as indicated by the thick solid line in FIG. 2H. With this arrangement, when the fuel injection amount is increased from the temporarily reduced value toward a value that corresponds to the accelerator depression amount ACCP (the power requirement), the EGR amount does not suffer from a response delay that would occur if the EGR amount were reduced in response to the change in the fuel injection amount, and the EGR amount is prevented from being excessively large due to the response delay. Consequently, the intake air amount of the diesel engine 1 will not be reduced due to the excess EGR amount, to be smaller than the required amount corresponding to the fuel injection amount, and the amount of particulates in the exhaust gas will not be increased due to combustion of the fuel with an insufficient amount of oxygen.

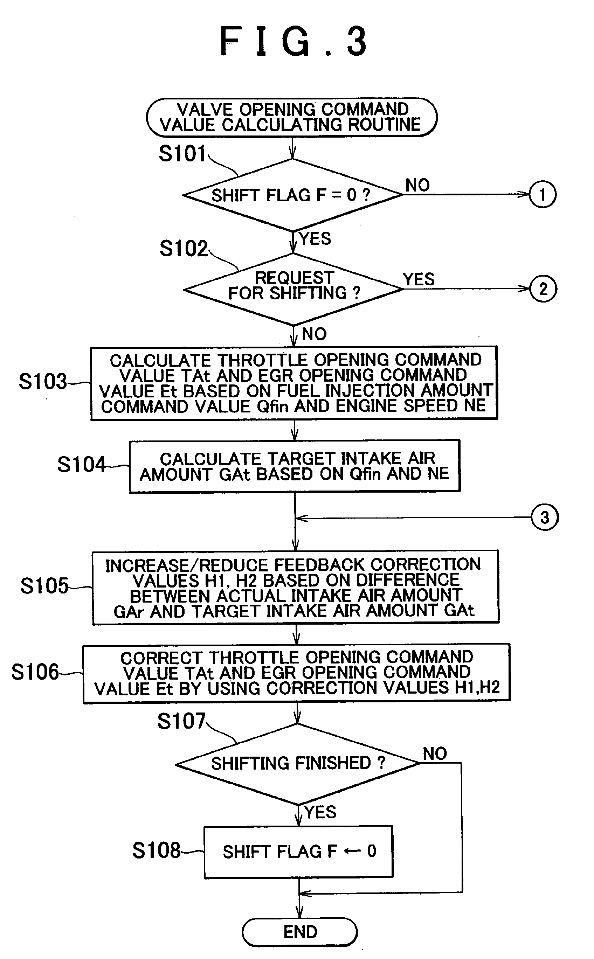

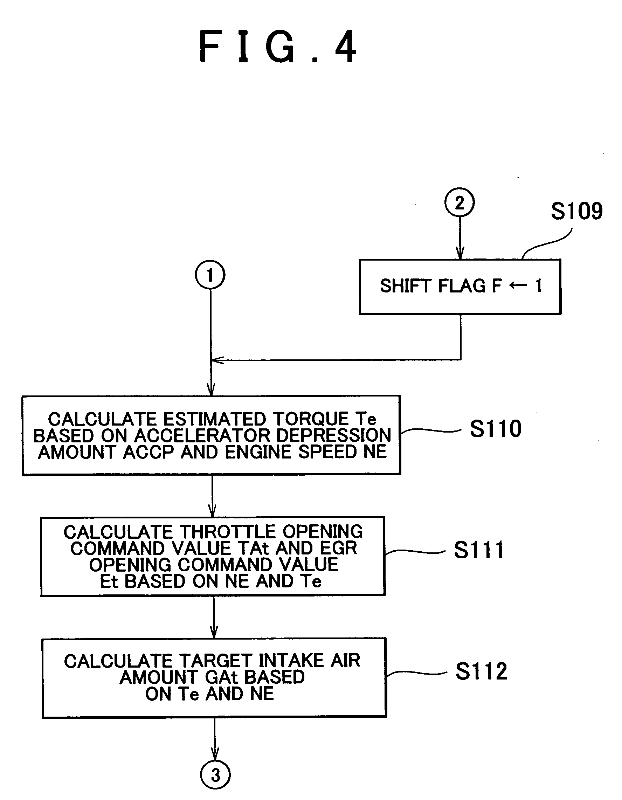

Next, a procedure of calculating the EGR opening command value Et and the throttle opening command value TAt will be described with reference to the flowchart of FIG. 3 and FIG. 4 showing a valve opening command value calculating routine. The valve opening command value calculating routine is executed by the engine control computer 14, for example, at predetermined time intervals.

In the valve opening command value calculating routine, if a shift flag F used for determining whether the transmission 9 is in the process of shifting is set at 0 (which indicates that the transmission 9 is not in the process of shifting) (YES in step S101 of FIG. 3), and no request for shifting of the transmission 9 is present (NO in step S102), a normal procedure of calculating the EGR opening command value Et and the throttle opening command value TAt is carried out in step S103. Namely, the EGR opening command value Et and the throttle opening command value TAt are calculated based on the fuel injection amount command value Qfin and the engine speed NE.

Subsequently, the target intake air amount GAt used for feedback control of the intake air amount in the diesel engine 1 is calculated in step S104, based on the fuel injection amount command value Qfin and the engine speed NE. The target intake air amount GAt is to be interpreted as an intake air amount required for limiting the amount of particulates in the exhaust gas to be equal to or smaller than the permissible value. Then, feedback correction values H1, H2 used for correcting the EGR opening command value Et and the throttle opening command value TAt are increased or reduced in step S105, based on a difference between the actual intake air amount GAr and the target intake air amount GAt.

More specifically, the feedback correction value H1 used for correcting the EGR opening command value Et is gradually reduced so as to reduce the EGR opening command value Et while the actual intake air amount GAr is smaller than the target intake air amount GAt. Conversely, while the actual intake air amount GAr is larger than the target intake air amount GAt, the feedback correction value H1 is gradually increased so as to increase the EGR opening command value Et. The feedback correction value H2 used for correcting the throttle opening command value TAt is gradually increased so as to increase the throttle opening command value TAt while the actual intake air amount GAr is smaller than the target intake air amount GAt. Conversely, while the actual intake air amount GAr is larger than the target intake air amount GAt, the feedback correction value H2 is gradually reduced so as to reduce the throttle opening command value TAt.

The EGR opening command value Et and the throttle opening command value TAt are corrected in step S106 by using the feedback correction values H1, H2, and the opening angles of the EGR valve 12 and the throttle valve 13 are controlled based on the corrected opening command values Et, TAt. With the opening control of the EGR valve 12 and the throttle valve 13, the EGR amount is controlled to a value that provides the maximum NOx reduction effect while precisely ensuring the intake air amount required for limiting the amount of particulates in the exhaust gas to be equal to or smaller than the permissible value.

In the vale opening command value calculating routine of FIG. 3, if it is determined in step S102 that a request for shifting of the transmission 9 is present (YES in S102), the control process proceeds to step S109 (FIG. 4) to set the shift flag F to "1" (which indicates that the transmission 9 is in the process of shifting), and then the process of steps S110 - S112 is executed. If the shift flag F is set to "1", a negative determination is made in step S101 (FIG. 3) in the subsequent control cycles, and the control process proceeds to steps S110 - S112. Thus, the process of steps S110 - S112 is executed while the transmission 9 is in the process of shifting.

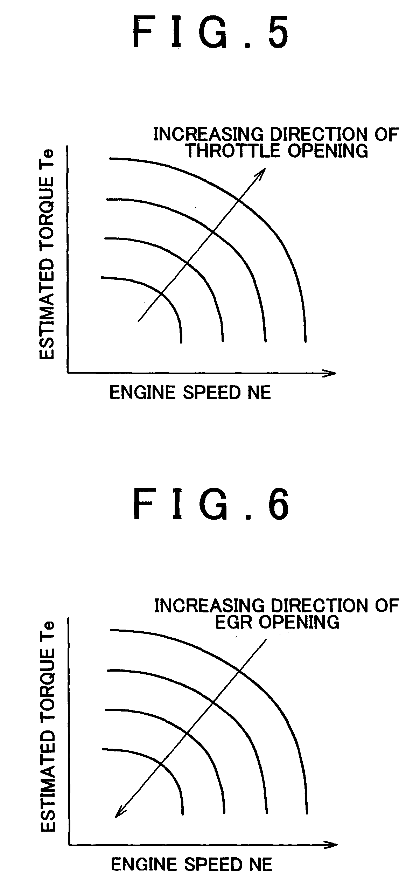

In step S110, the estimated torque Te is calculated based on the accelerator depression amount ACCP and the engine speed NE. In step S111, the EGR opening command value Et and the throttle opening command value TAt are calculated based on the engine speed NE and the estimated torque Te, with reference to, for example, the maps of FIG. 5 and FIG. 6. In step S112, the target intake air amount GAt used for feedback control of the intake air amount in the diesel engine 1 is calculated based on the estimated torque Te and the engine speed NE.

As is understood from the above description, during shifting of the transmission 9, the EGR opening command value Et and the throttle opening command value TAt are calculated based on the estimated torque Te obtained from the accelerator depression amount ACCP, and other parameter(s), instead of the fuel injection amount command value Qfin and other parameter(s). Also, during shifting of the transmission 9, the target intake air amount GAt is calculated based on the estimated torque Te and other parameter(s), instead of the fuel injection amount command value Qfin and other parameter(s).

As shown in FIG. 6, under a condition that the engine speed NE is constant, for example, the EGR opening command value Et decreases as the estimated torque Te increases, and increases as the estimated torque Te decreases. As shown in FIG. 5, under a condition that the engine speed NE is constant, for example, the throttle opening command value TAt increases as the estimated torque Te increases, and decreases as the estimated torque Te decreases.

After the process of steps S110 - S112 is executed, the control process proceeds to step S105 of FIG. 3. After the feedback correction values H1, H2 are increased or reduced in step S105, and the EGR opening command value Et and the throttle opening command value TAt are corrected in step S106 by using the correction values H1, H2, it is determined in step S107 whether shifting of the transmission 9 is finished. If an affirmative determination is made in step S107, step S108 is executed to set the shift flag F to "0" which indicates that the transmission 9 is not in the process of shifting.

The first embodiment as described above in detail provides the following effects.
(1) When the fuel injection amount command value Qfin is temporarily reduced irrespective of the accelerator depression amount ACCP (i.e., the power requirement) during shifting of the transmission 9, the EGR opening command value Et and the throttle opening command value TAt are calculated based on the estimated torque Te obtained from the accelerator depression amount ACCP, and other parameter(s), instead of the fuel injection amount command value Qfin. The estimated torque Te represents a theoretical output torque that would be obtained from the accelerator depression amount ACCP detected at the time of shifting, in a normal engine operation. Since the output torque of the diesel engine 1 varies with the fuel injection amount, the estimated torque Te is interpreted as a value corresponding to the fuel injection amount that depends upon the accelerator depression amount ACCP (power requirement) during shifting of the transmission 9. By controlling the EGR valve 12 and the throttle valve 13 based on the EGR opening command value Et and the throttle opening command value TAt obtained from the estimated torque Te and other parameter(s), therefore, the opening angles of the EGR valve 12 and the throttle valve 13 are kept substantially constant even if the fuel injection amount command value Qfin is temporarily reduced during shifting of the transmission 9. As a result, the EGR amount is not increased temporarily in response to the temporary reduction of the fuel injection amount command value Qfin, and is not reduced with a response delay when the fuel injection amount command value Qfin is increased from the temporarily reduced value. Thus, during shifting of the transmission 9, the EGR amount is prevented from being excessively large due to the response delay, and the intake air amount will not become smaller than the required amount determined in relation to the fuel injection amount, by an amount corresponding to the excess EGR amount. It is thus possible to suppress or avoid an otherwise possible increase in the amount of the particulates in the exhaust gas due to combustion of the fuel with an insufficient amount of oxygen supplied to the combustion chamber.
(2) In a normal engine operation, the feedback control of the intake air amount is performed by correcting the opening angles of the EGR valve 12 and the throttle valve 13 based on the feedback correction values H1, H2, so that the actual intake air amount GAr becomes close to the target intake air amount GAt. Assuming that the EGR valve 12 and the throttle valve 13 are driven so as to temporarily increase the EGR amount in accordance with the temporary reduction of the fuel injection amount command value Qfin during shifting of the transmission 9, the time required for making the actual intake air amount GAr equal to the target intake air amount GAt after completion of shifting is undesirably prolonged. This is because the actual intake air amount GAr measured when the EGR valve 12 and the throttle valve 13 are driven in the directions to increase the EGR amount is significantly smaller than the target intake air amount GAt. According to the first embodiment, on the other hand, the EGR valve 12 and the throttle valve 13 are not driven in the directions to increase the EGR amount even when the fuel injection amount command value Qfin is temporarily reduced during shifting of the transmission 9, and therefore the actual intake air amount GAr can be more quickly made equal to the target intake air amount GAt.
(3) During shifting of the transmission 9, the target intake air amount GAt used for feedback control of the intake air amount is calculated based on the estimated torque Te, rather than the fuel injection amount command value Qfin. The estimated torque Te is interpreted as a value corresponding to the fuel injection amount that depends upon the accelerator depression amount ACCP (the power requirement) detected during shifting of the transmission 9. By correcting the opening angles of the EGR valve 12 and the throttle valve 13 based on the feedback correction values H1, H2 during shifting of the transmission 9 so that the actual intake air amount GAr becomes close to the target intake air amount GAt, therefore, the actual intake air amount GAr can be quickly made equal to the target intake air amount GAt after completion of shifting of the transmission 9. This is because, when the opening angles of the EGR valve 12 and the throttle valve 13 are corrected in the manner as described above during shifting of the transmission 9, the actual intake air amount GAr becomes close to the target intake air amount GAt to be established after completion of shifting of the transmission 9.
(4) When the transmission 9 is shifted up or down based on the operating state of the vehicle in the automatic mode, or based on a shifting operation performed by the driver in the manual mode, a signal indicative of the presence of a request for shifting is transmitted from the transmission control computer 15 to the engine control computer 14. Upon receipt of the request for shifting, the engine control computer 14 starts the opening control of the EGR valve 12 and the throttle valve 13 based on the EGR opening command value Et and the throttle opening command value TAt calculated from the estimated torque Te and other parameter(s), so that the EGR amount is prevented from being excessively large due to a response delay during shifting of the transmission 9. Thus, where the transmission 9 capable of shifting in the automatic or manual mode is employed for use with the diesel engine 1, the engine control computer 14 is able to start the opening control of the EGR valve 12 and the throttle valve 13 with high accuracy for suppressing an excessive increase in the EGR amount that would otherwise occur due to the response delay.

### Second Embodiment

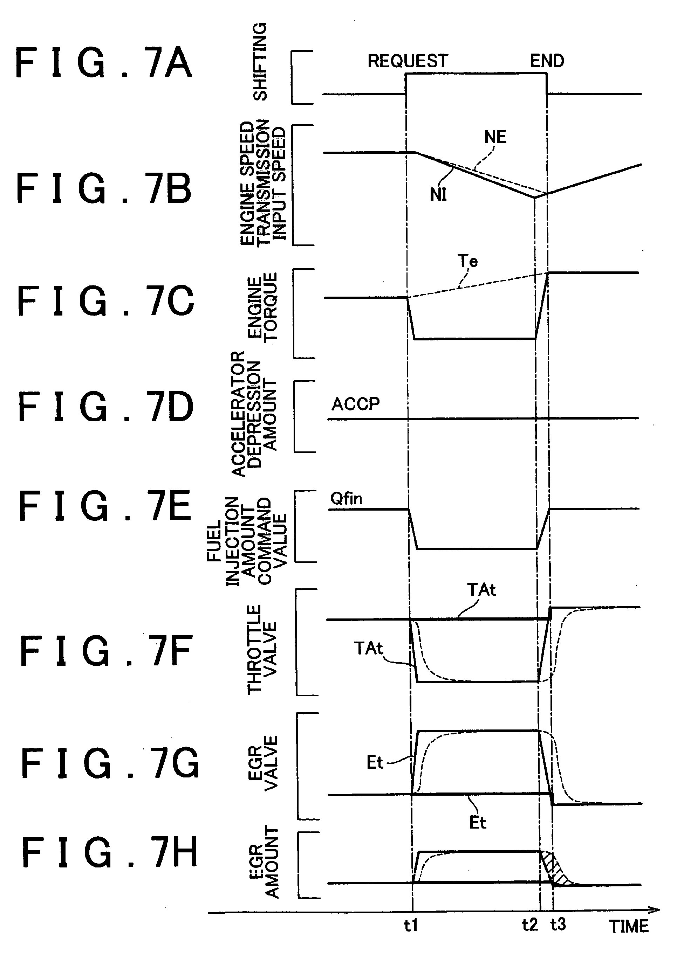

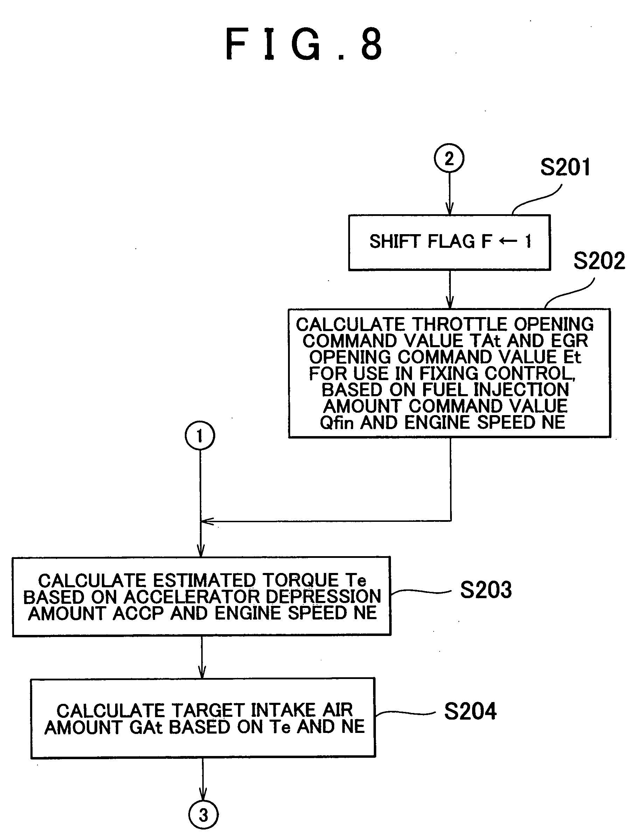

Next, a second embodiment of the invention will be described with reference to FIG. 7 and FIG. 8.

In this embodiment, fixing control is performed in which, during shifting of the transmission 9, the opening angles of the EGR valve 12 and the throttle valve 13 are fixed to respective values obtained immediately before shifting. With the fixing control, the EGR valve 12 and the throttle valve 13 are not driven in the directions to increase the EGR amount even when the fuel injection amount command value Qfin is temporarily reduced during shifting of the transmission 9. Accordingly, the EGR amount does not suffer from a response delay that would occur if the EGR amount were reduced in response to the subsequent increase of the fuel injection amount command value Qfin from the temporarily reduced value. Thus, the EGR amount is prevented from being excessively large due to the response delay.

Here, the above-described fixing control will be described in detail with reference to the time chart of FIG. 7A through FIG. 7H.

When a request for shifting of the transmission 9 is made at time t1, the EGR opening command value Et and the throttle opening command value TAt are calculated based on the fuel injection amount command value Qfin and the engine speed NE. During shifting of the transmission 9, the EGR opening command value Et is fixed to the value calculated as described above, and is kept constant as indicated by the thick solid line in FIG. 7G, and the throttle opening command value TAt is fixed to the value calculated as described above, and is kept constant as indicated by the thick solid line in FIG. 7F. As a result, the opening angle of the EGR valve 12 controlled based on the EGR opening command value Et and the opening angle of the throttle valve 13 controlled based on the throttle opening command value TAt are kept constant, and the EGR amount is also kept constant as indicated by the thick solid line in FIG. 7H.

Although the fuel injection amount (the fuel injection amount command value Qfin) is temporarily reduced during shifting of the transmission 9, the opening angles of the EGR valve 12 and the throttle valve 13 are not changed in the directions to increase the EGR amount, but are kept constant so that the EGR amount is kept constant. Accordingly, when the fuel injection amount is increased (after time t2) from the temporarily reduced value to a value corresponding to the accelerator depression amount ACCP (i.e., the power requirement), the EGR amount does not suffer from a response delay that would occur if the EGR amount were reduced in response to the increase in the fuel injection amount, and is thus prevented from being larger than the required value by an amount corresponding to the hatched area shown in FIG. 7H.

Next, a procedure of calculating the EGR opening command value Et and the throttle opening command value TAt will be described. In this embodiment, the engine control computer 14 executes a valve opening command value calculating routine for calculating the EGR opening command value Et and the throttle opening command value TAt, in which steps S109 - S112 (FIG. 3) of the valve opening command value calculating routine of the first embodiment are replaced by steps S201 - S204 as shown in FIG. 8.

In the valve opening command value calculating routine of the second embodiment, when a request for shifting of the transmission 9 is made, the shift flag F is set to "1" (which indicates that the transmission 9 is in the process of shifting) in step S201. In the next step S202, the EGR opening command value Et and the throttle opening command value TAt for use in the fixing control are calculated based on the fuel injection amount command value Qfin and the engine speed NE. The EGR opening command value Et and the throttle opening command value TAt thus calculated represent the positions (opening angles) of the EGR valve 12 and the throttle valve 13 established immediately before shifting of the transmission 9. During shifting of the transmission 9, the EGR opening command value Et and the throttle opening command value TAt are fixed to these calculated values, respectively.

During shifting of the transmission 9, the estimated torque Te is calculated in step S203, based on the accelerator depression amount ACCP and the engine speed NE, and the target intake air amount GAt for use in feedback control of the intake air amount is calculated in step S204, based on the estimated torque Te and the engine speed NE. If the actual intake air amount GAr deviates from the target intake air amount GAt for some reason, the EGR opening command value Et and the throttle opening command value TAt are corrected so as to make the actual intake air amount GAr close to the target intake air amount GAt even during the fixing control.

The second embodiment provides the following effect.

(5) Since the fixing control for fixing the EGR opening command value Et and the throttle opening command value TAt to the values obtained immediately before shifting is executed during shifting of the transmission 9, the opening angles of the EGR valve 12 and the throttle valve 13 are not changed in the directions to increase the EGR amount in accordance with the temporary reduction of the fuel injection amount command value Qfin. When the fuel injection amount command value Qfin is increased from the temporarily reduced value, therefore, the EGR amount is not reduced with a response delay in response to the increase in the fuel injection amount command value Qfin, and is thus prevented from being excessively large due to the response delay. Consequently, the intake air amount is prevented from being reduced to be smaller than the required amount determined in relation to the fuel injection amount, by an amount corresponding to the excess EGR amount, and an otherwise possible increase in the amount of particulates in the exhaust gas due to combustion of the fuel with an insufficient amount of oxygen can be suppressed or avoided.

### Third Embodiment

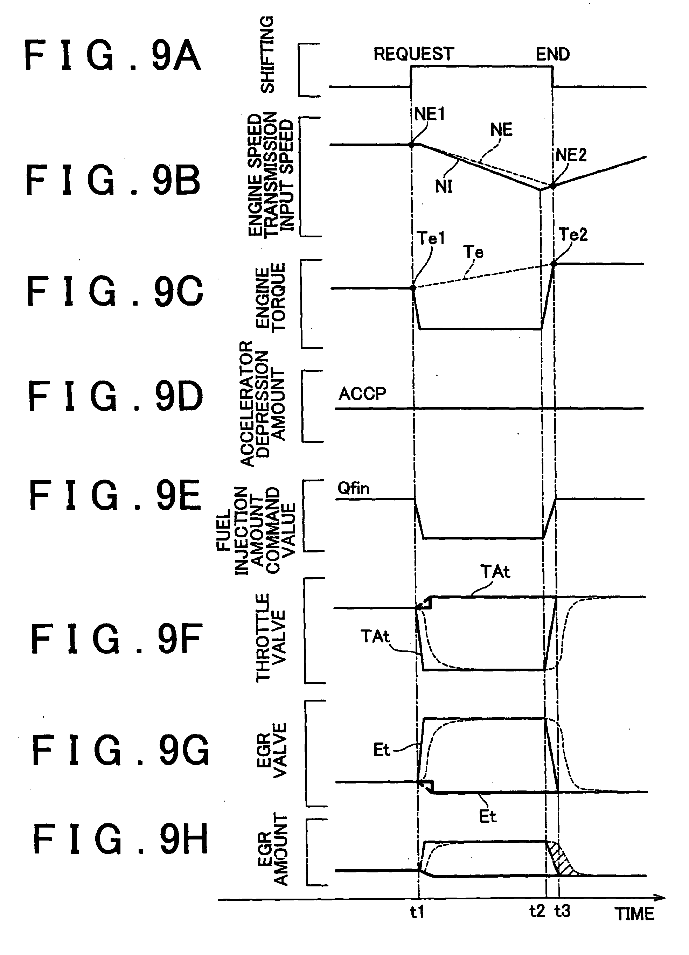

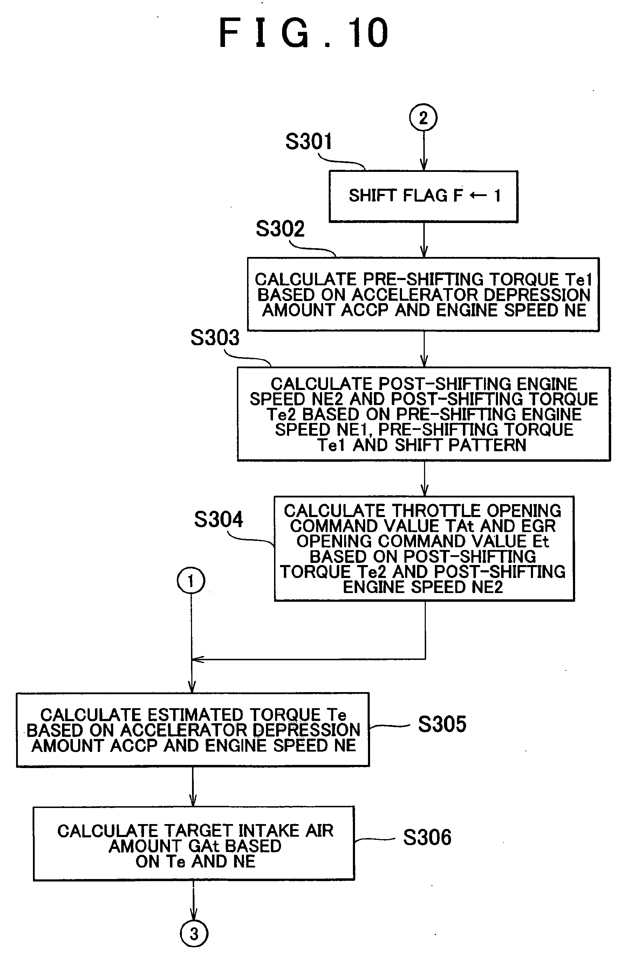

Next, a third embodiment of the invention will be described with reference to FIG. 9 and FIG. 10.

In the third embodiment, during shifting of the transmission 9, the EGR opening command value Et and the throttle opening command value TAt are calculated based on post-shifting torque Te2 as estimated torque Te immediately after shifting, and post-shifting engine speed NE2 as an engine speed NE immediately after shifting. Since the opening angles of the EGR valve 12 and the throttle valve 13 are controlled based on the thus calculated EGR opening command value Et and the throttle opening command value TAt, the EGR valve 12 and the throttle valve 13 are not driven in such directions as to increase the EGR amount even if the fuel injection amount command value Qfin is temporarily reduced during shifting of the transmission 9. Accordingly, an otherwise possible reduction of the EGR amount with a response delay will not occur in response to the subsequent increase of the fuel injection amount command value Qfin from the temporarily reduced value, and the EGR amount is prevented from being excessively large due to the response delay.

Here, the calculation of the post-shifting torque Te2 and the post-shifting engine speed NE2 and the opening control of the EGR valve 12 and the throttle valve 13 based on the EGR opening command value Et and the throttle opening command value TAt obtained from these values Te2, NE2 will be described with reference to the time chart of FIG. 9A through FIG. 9H.

When a request for shifting of the transmission 9 is made at time t1, the estimated torque at this time is calculated as pre-shifting torque Te1, based on the accelerator depression amount ACCP (i.e., the power requirement) and the engine speed NE. Also, the engine speed NE at this time is used as pre-shifting engine speed NE 1. The pre-shifting engine speed NE1 and the pre-shifting torque Te1 are then multiplied by certain coefficients corresponding to the speed (or the gear position) to be established after shifting, to be thus converted into the post-shifting engine speed NE2 as the engine speed NE immediately after shifting and the post-shifting torque Te2 as the estimated torque Te immediately after shifting.

The EGR opening command value Et and the throttle opening command value TAt are calculated based on the post-shifting engine speed NE2 and the post-shifting torque Te2. During shifting of the transmission 9, the EGR opening command value Et is set to the value calculated as described above, as indicated by the thick solid line in FIG. 9G, and the throttle opening command value VAt is set to the value calculated as described above, as indicated by the thick solid line in FIG. 9F. The opening angles of the EGR valve 12 and the throttle valve 13 are controlled based on the EGR opening command value Et and the throttle opening command value TAt.

The EGR opening command value Et and the throttle opening command value TAt may be suddenly changed as indicated by the thick solid lines in FIG. 9G and FIG. 9F, or may be gradually changed as indicated by the thick broken lines in FIG. 9G and FIG. 9F.

While the fuel injection amount (or the fuel injection amount command value Qfin) is temporarily reduced during shifting of the transmission 9, the EGR valve 12 and the throttle valve 13 are controlled during shifting based on the EGR opening command value Et and the throttle opening command value TAt obtained from the post-shifting torque Te2 and the post-shifting engine speed NE2. Thus, the opening angles of the EGR valve 12 and the throttle valve 13 are not changed in such directions as to increase the EGR amount in response to the temporary reduction of the fuel injection amount, and the EGR amount is kept substantially constant as indicated by the thick solid line in FIG. 9H. Accordingly, when the fuel injection amount is increased from the temporarily reduced value to the value corresponding to the accelerator depression amount ACCP (i.e., the power requirement) after time t2, the EGR amount is prevented from being larger than the required value by an amount corresponding to the hatched area shown in FIG. 9H, due to a response delay that would occur if the EGR amount were reduced in response to the increase of the fuel injection amount command value Qfin.

Next, a procedure of calculating the EGR opening command value Et and the throttle opening command value TAt will be described. In the third embodiment, the engine control computer 14 executes a valve opening command value calculating routine for calculating the EGR opening command value Et and the throttle opening command value TAt, in which steps S109 - S112 (FIG. 3) of the valve opening command value calculating routine of the first embodiment are replaced by steps S301 - S306 as shown in FIG. 10.

In the valve opening command value calculating routine of the third embodiment, when a request for shifting of the transmission 9 is made, the shift flag F is set to "1" (which indicates that the transmission 9 is in the process of shifting) in step S301, and then the EGR opening command value Et and the throttle opening command value TAt are calculated based on the post-shifting torque Te2 and the post-shifting engine speed NE2 in steps S302 - S304.

More specifically, the pre-shifting torque Te1 is calculated in step S302 based on the accelerator depression amount ACCP and the engine speed NE. In the next step S303, the post-shifting engine speed NE2 and the post-shifting torque Te2 are calculated based on the pre-shifting engine speed NE1, the pre-shifting torque Te1 and a shift pattern that indicates the speed (or gear position) to which the transmission 9 is shifted. In step S304, the EGR opening command value Et and the throttle opening command value TAt are calculated based on the post-shifting torque Te2 and the post-shifting engine speed NE2.

During shifting of the transmission 9, the estimated torque Te is calculated in step S305 based on the accelerator depression amount ACCP and the engine speed NE, and the target intake air amount GAt used for feedback control of the intake air amount is calculated in step S306 based on the estimated torque Te and the engine speed NE. If the actual intake air amount GAr deviates from the target intake air amount GAt for some reason, the EGR opening command value Et and the throttle opening command value TAt are corrected so that the actual intake air amount GAr approaches the target intake air amount GAt.

The third embodiment provides the following effect.

(6) When the fuel injection amount command value Qfin is temporarily reduced irrespective of the accelerator depression amountACCP (i.e., the power requirement) during shifting of the transmission 9, the EGR opening command value Et and the throttle opening command value TAt are calculated based on the post-shifting torque Te2 that is the estimated torque Te immediately after shifting and other parameter(s), instead of the fuel injection amount command value Qfin. The post-shifting torque Te2 is predicted from the estimated torque Te immediately before shifting, which is obtained from, e.g., the accelerator depression amount ACCP (the power requirement) immediately before shifting, the shift pattern of the transmission 9, and other parameter(s). Since the output torque of the diesel engine 1 varies with the fuel injection amount, the post-shifting torque Te2 corresponds to the fuel injection amount that is obtained immediately after shifting of the transmission 9 and depends upon the accelerator depression amount ACCP. By controlling the EGR valve 12 and the throttle valve 13 based on the EGR opening command value Et and the throttle opening command value TAt obtained from the post-shifting torque Te2 and the post-shifting engine speed NE2, therefore, the EGR valve 12 and the throttle valve 13 are kept substantially constant even if the fuel injection amount command value Qfin is temporarily reduced during shifting of the transmission 9. Accordingly, the EGR amount is prevented from being temporarily increased in accordance with the temporary reduction of the fuel injection amount command value Qfin, and is also prevented from being reduced with a delay in response to the subsequent increase of the fuel injection amount command value Qfin from the reduced value. Consequently, the EGR amount will not become excessively large due to the response delay during shifting of the transmission 9, and the intake air amount will not be reduced to be smaller than the required amount commensurate to the fuel injection amount, by an amount corresponding to the excess EGR amount. It is thus possible to suppress or avoid an otherwise possible increase in the amount of particulates in the exhaust gas due to combustion of the fuel with an insufficient amount of oxygen.

The above-described embodiments may be modified, for example, in the following manners.
(a) While the transmission 9 is able to perform shifting in the automatic mode and shifting in the manual mode in each of the illustrated embodiments, a transmission that performs shifting in only one of these two modes may be employed in place of the transmission 9.
(b) In each of the illustrated embodiments, the feedback control of the intake air amount may be stopped during shifting of the transmission 9.
(c) The above-described feedback control may be realized by correcting only one of the opening angle of the EGR valve 12 and the opening angle of the throttle valve 13.
(d) The feedback control as described above is not necessarily carried out.
(e) In each of the illustrated embodiments, the control of the EGR amount may be accomplished through the adjustment of only one of the opening angle of the EGR valve 12 and the opening angle of the throttle valve 13.
(f) In the first embodiment, the EGR opening command value Et and the throttle opening command value TAt are calculated based on the estimated torque Te obtained from, for example, the accelerator depression amount ACCP during shifting of the transmission 9. However, the invention is not limited to this arrangement. For example, during shifting of the transmission 9, the EGR opening command value Et and the throttle opening command value TAt may be calculated based on the accelerator depression amount ACCP and the engine speed NE.

### Fourth Embodiment

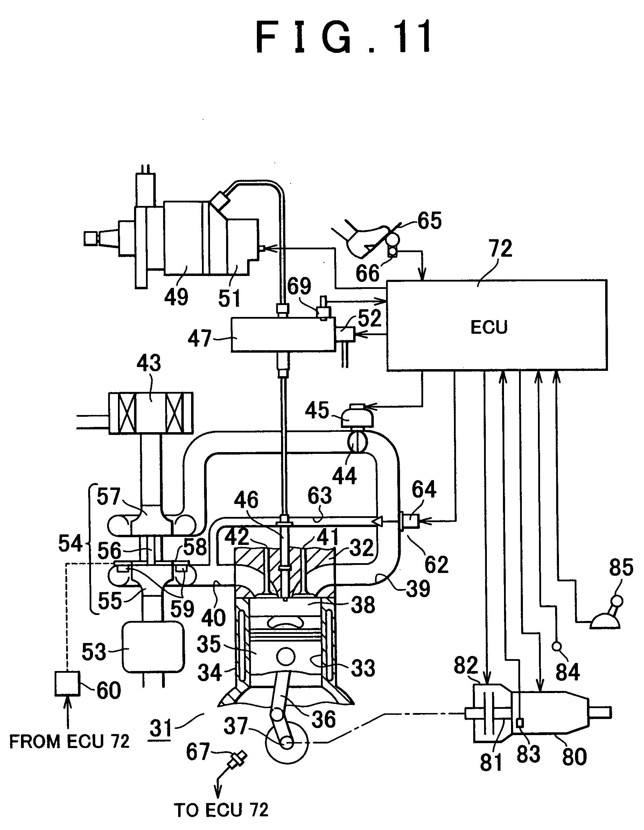

Referring next to FIG. 11 through FIG. 17, a control system according to a fourth embodiment of the invention, which is applied to a diesel engine of a vehicle, will be described in detail.

As shown in FIG. 11, an accumulator type diesel engine (which will be simply called "engine" when appropriate) 31 is installed on the vehicle. The engine 31 includes a cylinder head 32, and a cylinder block 34 having two or more cylinders 33. Pistons 35 are received in the respective cylinders 33 such that each piston 35 can reciprocate within the corresponding cylinder 33. Each of the pistons 35 is coupled to a connecting rod 36, which is in turn coupled to a crankshaft 36 as an output shaft of the engine 31. The reciprocation of each piston 35 is converted into rotary motion by the connecting rod 36, and the rotary motion is transmitted to the crankshaft 37. The rotation of the crankshaft 37 is then transmitted to drive wheels (not shown) of the vehicle, via a transmission 80 in which the speed of rotation is changed, and other components.

The transmission 80 has two or more speeds or gear positions, for example, first speed through fifth speed, and is adapted to be shifted from one speed to another speed depending upon the running state (or operating state) of the vehicle or in response to a request made by the driver. An input shaft 81 of the transmission 80 and the crankshaft 37 of the diesel engine 31 are coupled to each other via a clutch mechanism 82 that is operable to connect or disconnect the input shaft 81 with or from the crankshaft 37. When the transmission 80 is shifted from one speed to another speed, the clutch mechanism 82 is initially released so that no rotary power is transmitted between the diesel engine 31 and the transmission 80, and shifting of the transmission 80 is performed in this condition. After the shifting action is completed, the clutch mechanism 82 is engaged.

In the engine 31, combustion chambers 38 are formed in the respective cylinders 33. An intake passage 39 and an exhaust passage 40 are connected to each of the combustion chambers 38. In the cylinder head 32, an intake valve 41 and an exhaust valve 42 are provided for each of the cylinders 33. The intake and exhaust valves 41, 42 are reciprocated in accordance with rotation of the crankshaft 37, so as to open and close the intake and exhaust passages 39, 40, respectively.

An air cleaner 43, a throttle valve 44 and other components are disposed in the intake passage 39. In the suction stroke of the engine 31 operating in a basic mode, when the piston 35 descends while the exhaust valve 42 is closed and the intake valve 41 is opened, the pressure in the cylinder 33 becomes lower than the atmospheric pressure (i.e., becomes negative), and the ambient air is drawn from the outside of the engine 31 into the combustion chamber 38 through respective portions of the intake passage 39.

The throttle valve 44 is rotatably supported in the intake passage 39, and is adapted to be driven by an actuator 45, such as a stepping motor, which is coupled to the throttle valve 44. The amount of air flowing through the intake passage 39 (which may also be called "air mass flow") varies depending upon the opening degree or angel of the throttle valve 44.

Fuel injectors 46 for injecting fuel into the respective combustion chambers 38 are mounted in the cylinder head 32. Each of the fuel injectors 46 includes a solenoid-operated valve (not shown), and fuel injection from the fuel injector 46 into the corresponding combustion chamber 38 is controlled by means of the solenoid-operated valve. The fuel injectors 46 are connected to a common rail 47 serving as an accumulator (or a common accumulator pipe). In operation, fuel in the common rail 47 is injected from each of the fuel injectors 46 into the corresponding combustion chamber 38 while the solenoid-operated valve is open. A relatively high pressure equivalent to a fuel injection pressure is accumulated in the common rail 47. In order to build up the fuel injection pressure, the common rail 47 is connected to a supply pump 49 serving as a fuel pump.

The supply pump 49 sucks fuel from a fuel tank (not shown), and raises the pressure of the fuel to a certain level by causing a cam that rotates in synchronism with the rotation of the engine 31 to reciprocate a plunger, so that the fuel is supplied at the elevated pressure to the common rail 47. The supply pump 49 is provided with a pressure regulating valve 51 for controlling the pressure and amount of the fuel delivered toward the common rail 47.

The common rail 47 is provided with a relief valve 52 that is arranged to open when a certain condition is satisfied. When the relief valve 52 is opened, the highpressure fuel in the common rail 47 is returned to the fuel tank through a return pipe (not shown), and the pressure in the common rail 47 is lowered.

In operation, the fuel is injected from the fuel injector 46 toward the intake air having a high temperature and a high pressure, which air has been introduced into the cylinder 33 through the intake passage 39 and compressed by the piston 35. The thus injected fuel ignites by itself and burns. Combustion gas produced upon combustion of the fuel is utilized to reciprocate the piston 35 and rotate the crankshaft 37, thereby to provide the driving force (i.e., output torque) of the engine 31. The combustion gas is then discharged to the outside of the engine 31 through a catalyst 33, and the like, provided in the exhaust passage 40.

The engine 31 is provided with a variable-nozzle turbocharger 54 as one type of supercharger. The variable-nozzle turbocharger 54 includes a turbine wheel 55 that is rotated by exhaust gas flowing through the exhaust passage 40, and a compressor wheel 57 that is disposed in the intake passage 39 and is coupled to the turbine wheel 55 via a rotor shaft 56. In the variable-nozzle turbocharger 54, the exhaust gas is directed or blown at the turbine wheel 55, to thereby rotate the wheel 55. This rotation is transmitted to the compressor wheel 57 via the rotor shaft 56. In the engine 31, air is not only fed to the combustion chamber 38 due to the negative pressure developed in the combustion chamber 38 along with the movement of the piston 35, but also the air is forced to be fed to the combustion chamber 38 (i.e., the engine 31 is supercharged) due to the rotation of the compressor wheel 57. In this manner, the charging efficiency with which the combustion chamber 38 is charged with the air is enhanced.

In the variable-nozzle turbocharger 54, an exhaust path is formed in the direction of rotation of the turbine wheel 55, to surround the outer periphery of the turbine wheel 55, and the exhaust gas passing the exhaust path is blown toward the axis of the turbine wheel 55. In the exhaust path is provided a variable nozzle mechanism in which several nozzle vanes (or variable nozzles) 59 are rotatably provided on a ring-like nozzle back plate 58. The variable nozzle mechanism is operable to change the cross-sectional area of the exhaust path through which the exhaust gas passes, by utilizing synchronous opening/closing actions of all of the nozzle vanes 59 caused by an operation of an actuator 60, such as a DC motor, so that the flow rate of the exhaust gas blown against the turbine wheel 55 is made variable. With the exhaust flow rate thus made variable, the speed of rotation of the turbine wheel 55 is adjusted, which makes it possible to adjust the boost pressure at which the intake air is supplied into the combustion chamber 38.

The engine 31 is provided with an exhaust gas recirculation (abbreviated to "EGR") device 62 that is operable to recirculate part of exhaust gas flowing in the exhaust passage 40 to the intake passage 39. The EGR device 62 uses the exhaust gas (or EGR gas) recirculated and mixed with the intake air to increase the proportion of inert gas in the air-fuel mixture and lower the maximum combustion temperature, thereby reducing nitrogen oxides (NOx) as one type of air pollutants in the exhaust gas.

The EGR device 62 includes an EGR passage 63 and an EGR valve 64. The EGR passage 63 connects the exhaust passage 40 with a portion of the intake passage 39 located downstream of the throttle valve 44. The EGR valve 64 is disposed in the EGR passage 63, for example, is mounted in the EGR passage 63 at a location where the EGR passage 63 is joined to the intake passage 39. The flow rate of the EGR gas in the EGR passage 63 varies depending upon the opening degree or angle of the EGR valve 64.

An electronic control unit (hereinafter referred to as "ECU") 72 is provided for controlling the diesel engine 31 constructed as described above. The ECU 72 performs fuel injection control, such as fuel injection amount control and fuel injection timing control, in the diesel engine 31. Along with the fuel injection amount control, the ECU 72 performs injection pressure control of the fuel in the common rail 47 and boost pressure control by means of the variable-nozzle turbocharger 54. Also, the ECU 72 performs opening control of the EGR valve 64 and opening control of the throttle valve 44. In addition, the ECU 72 performs driving control of the transmission 80 and the clutch mechanism 82.

The ECU 72 receives various signals, which include: (a) a detection signal from an accelerator position sensor 66 that senses an amount of depression of an accelerator pedal 65 operated by the driver of the vehicle, (b) a detection signal from a crank position sensor 67 that generates a signal in accordance with rotation of the crankshaft 37, (c) a detection signal from a fuel pressure sensor 69 that senses the pressure of fuel stored in the common rail 47, which will also be called "injection pressure" (PF), (d) a signal from an input rotational speed sensor 83 that senses the speed of rotation of the input shaft 81 of the transmission 80, (e) a detection signal from a vehicle speed sensor 84 that senses the vehicle speed of the automobile, and (f) a signal indicative of the position of a shift lever 85 operated by the driver.

The shift lever 85 is used for switching a shift mode at the time of upshifting or downshifting of the transmission 80 between an automatic mode in which the transmission 80 is automatically shifted up or down depending upon the running state of the vehicle or the power requested by the driver, and a manual mode in which the transmission 80 is shifted up or down based on an operation of the shift lever 85 by the driver. In the automatic mode, shifting of the transmission 80 is automatically effected based on the vehicle speed obtained from the detection signal received from the vehicle speed sensor 84, and the accelerator depression amount ACCP. In the manual mode, shifting of the transmission 80 is effected through a shifting operation performed by the driver on the shift lever 85, i.e., manipulation of the shift lever 85 by the driver.

The ECU 72 performs fuel injection amount control so as to adjust or control the output torque of the diesel engine 31. The fuel injection amount control is performed by driving the fuel injector 46 in a controlled manner, based on a fuel injection amount command value Qfin calculated from the accelerator depression amount ACCP, engine speed NE and other parameter(s). The accelerator depression amount ACCP is calculated based on the detection signal from the accelerator position sensor 66, and the engine speed NE is calculated based on the detection signal from the crank position sensor 67.

With the fuel injector 46 driven under control of the ECU 72 as described above, the fuel is injected in an amount corresponding to the fuel injection amount command value Qfin, so that the output torque of the diesel engine 31 is adjusted as desired. The accelerator depression amount ACCP used for calculation of the fuel injection amount command value Qfin is a parameter that represents a request made by the driver for running the vehicle, in other words, the power required to be generated by the diesel engine 31. By controlling the fuel injection amount based on the fuel injection amount command value Qfin, therefore, the output torque of the diesel engine 31 can be adjusted so as to provide the required output torque that meets the request of the driver.

The ECU 72 also controls the fuel pressure in the common rail 47, i.e., the injection pressure, by controlling the amount of fuel delivered by the supply pump 49 and regulating the relief pressure of the relief valve 52. As the injection pressure increases, atomization of fuel injected from the fuel injector 46 can be promoted. When a large amount of fuel is to be injected, the injection pressure is set to an increased level so as to promote the atomization of the injected fuel, thereby reducing or eliminating fuel particles that remain unburned, and suppressing formation of particulates whose main component is soot.

Accordingly, the adjustment of the supply pump 49 and the relief valve 52 for controlling the injection pressure is performed based on the fuel injection amount command value Qfin, and other parameter(s).

More specifically, an injection pressure command value PFt used for control of the injection pressure PF is calculated based on the fuel injection amount command value Qfin and the engine speed NE. Under a condition that the engine speed NE is constant, the injection pressure command value PFt is increased as the fuel injection amount command value Qfin increases, and is reduced as the fuel injection amount command value Qfin decreases.

Then, the supply pump 49 and the relief valve 52 are driven under control of the ECU 72, based on the injection pressure command value PFt. With this control, the injection pressure is increased as the fuel injection amount command value Qfin increases, and is reduced as the fuel injection amount command value Qfin decreases.

Also, the ECU 72 adjusts the injection timing in accordance with the fuel injection amount, so as to optimize the combustion state in the diesel engine 31. As the injection timing is advanced, combustion can be started at an earlier time in the diesel engine 31.

Furthermore, the ECU 72 controls the boost pressure produced by the variable-nozzle turbocharger 54, by driving the actuator 60 to adjust the opening angle VNT of the nozzle vanes 59, so as to optimize the combustion state in the diesel engine 31.

Also, the ECU 72 performs shifting of the transmission 80 in response to a change in the vehicle operating state, such as the vehicle speed or the accelerator depression amount ACCP, in the automatic mode, or based on a shifting operation performed by the driver on the shift lever 85, in the manual mode.

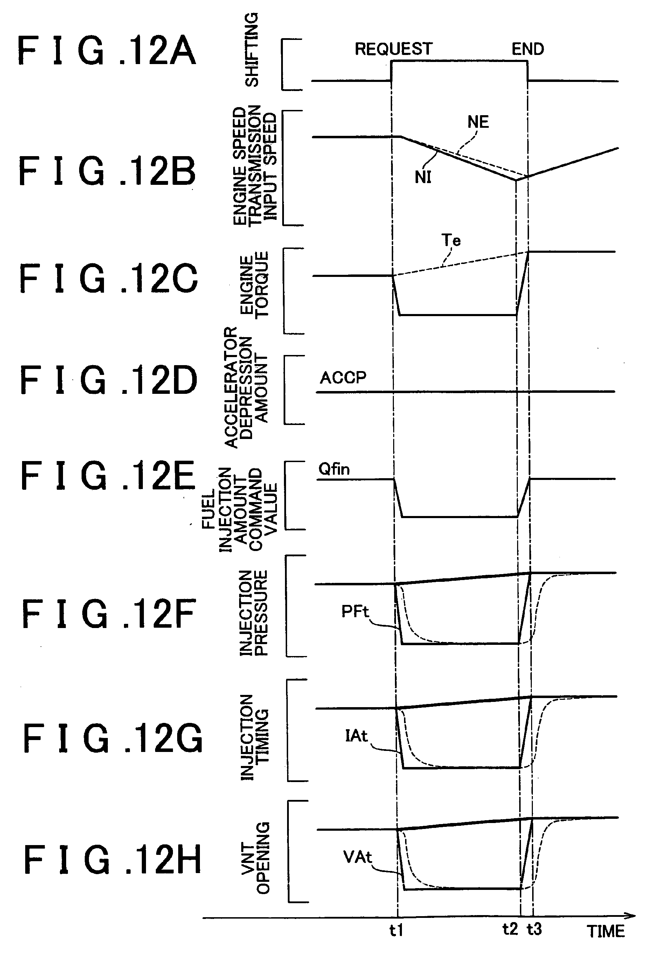

Next, various controls of the diesel engine 31, clutch mechanism 82 and the transmission 80 during shifting of the transmission 80 will be explained with reference to the time chart of FIG. 12A through FIG. 12H.

The ECU 72 controls driving of the clutch mechanism 82, for automatic disengagement and engagement of the clutch mechanism 82, so that no rotary power is transmitted between the diesel engine 31 and the transmission 80 during shifting of the transmission 9.

More specifically, prior to a start of a shifting action of the transmission 80, the clutch mechanism 82 is released, for example, when a request for shifting is made as shown in FIG. 12A, so that power transmission between the diesel engine 31 and the transmission 80 is temporarily cut off at time t1. In this condition, a shifting action, such as upshifting or downshifting, of the transmission 80 is carried out. While the clutch mechanism 82 is released, the fuel injection amount is temporarily reduced irrespective of the power requirement for the diesel engine 1, so that the engine speed NE of the diesel engine 31 is prevented from excessively increasing. In this manner, torque control is performed so as to reduce the output torque of the engine 31.

The reduction of the fuel injection amount for the torque control is accomplished by reducing the fuel injection amount command value Qfin that is normally calculated based on, e.g., the accelerator depression amount ACCP (the power requirement), to a predetermined value as shown in FIG. 12E, irrespective of the accelerator depression amount ACCP shown in FIG. 12D. As the predetermined value is preferably employed, for example, a value that makes the output torque of the diesel engine 31 equal to "0Nm". By reducing the fuel injection amount command value Qfin as described above, the fuel injection amount of the diesel engine 31 is reduced, and the output torque of the engine 31 is accordingly reduced as indicated by the solid line in FIG. 12C.

With the above-described torque control executed, the engine speed NE measured while the clutch mechanism 82 is being released is gradually lowered as indicated by the broken line in FIG. 12B. Also, the input rotational speed NI, which is the speed of rotation of the input shaft 81 of the transmission 80, varies depending upon a shift pattern of the transmission 80, after release of the clutch mechanism 82. The input rotational speed NI is obtained based on the detection signal received from the input rotational speed sensor 83.

The solid line in FIG. 12B indicates the progression of the input rotational speed NI when the transmission 80 is shifted up. In this case, the input rotational speed NI gradually decreases according to a change in the gear ratio of the transmission 80 resulting from the upshifting, after release of the clutch mechanism 82.

When the shifting action for shifting up the transmission 80 is finished at time t2, the fuel injection amount command value Qfin is gradually increased as shown in FIG. 12E toward a value corresponding to the accelerator depression amount ACCP (the power requirement) and the engine speed NE, so that the fuel injection amount is gradually increased. At the same time, the clutch mechanism 82 starts being engaged. As a result, the engine speed NE and the input rotational speed NI are made equal to each other, and the crankshaft 37 and the input shaft 81 of the transmission 80 are coupled to each other through engagement of the clutch mechanism 82 at time t3. With the crankshaft 37 and the input shaft 81 thus engaging with each other, shifting (upshifting in this case) of the transmission 80 is completed.

When the fuel injection amount is temporarily reduced for the torque control as described above, the fuel injection amount command value Qfin is reduced down to the predetermined value irrespective of the accelerator depression amount ACCP (the power requirement), and is thereafter increased to the value corresponding to the accelerator depression amount ACCP. The fuel injection amount command value Qfin is normally used for calculating the injection pressure command value PFt, injection timing command value IAt and the VNT opening command value VAt.

If the fuel injection amount command value Qfin is temporarily reduced, therefore, the injection pressure command value PFt is temporarily reduced as indicated by the thin solid line in FIG. 12F, and the injection timing command value IAt is temporarily reduced as indicated by the thin solid line in FIG. 12G, in accordance with the reduction of the fuel injection amount command value Qfin. Also, the VNT opening command value VAt is temporarily reduced as indicated by the thin solid line in FIG. 12H. As a result, the relief valve 52 is driven in such a direction as to temporarily reduce the injection pressure, as indicated by the broken line in FIG. 12F, and the fuel injector 46 is driven in such a direction as to temporarily retard the injection timing, as indicated by the broken line in FIG. 12G. Also, the nozzle vanes 59 are driven in a closing direction so as to temporarily reduce the boost pressure, as indicated by the broken line in FIG. 12H.

With the control for reducing the injection pressure of the relief valve 52 as described above, the injection pressure PF is temporarily reduced in accordance with the temporary reduction of the fuel injection amount command value Qfin. Although the injection pressure is ideally changed as indicated by the thin solid line in FIG. 12F in accordance with changes in the fuel injection amount command value Qfin, the injection pressure is actually changed with a response delay as indicated by the broken line in FIG. 12F, relative to the changes in the fuel injection amount command value Qfin. Also, the injection timing is actually changed with a response delay as indicated by the broken line in FIG. 12G, relative to the changes in the fuel injection amount command value Qfin. Furthermore, the boost pressure is actually changed with a response delay as indicated by the broken line in FIG. 12H, relative to the changes in the fuel injection amount command value Qfin.

In the presence of the response delay in changes in the injection pressure, it becomes difficult to change the injection pressure in accordance with a change in the fuel injection amount with high accuracy when the fuel injection amount is increased toward the value corresponding to the accelerator depression amount ACCP after being once reduced for the torque control. Thus, when the fuel injection amount is increased after being once reduced as described above, the injection pressure is increased with a delay to a value suited for the increased fuel injection amount, resulting in a reduction in the injection pressure at the end of shifting. With the injection pressure thus reduced, the injected fuel is less likely to be atomized. As a result, fuel particles injected into the combustion chamber 38 are not completely burned out but some of them remain unburned and are turned into particulates, and the amount of particulates in the exhaust gas is inevitably increased.

In the presence of the response delay in changes in the boost pressure, it becomes difficult to change the boost pressure in accordance with a change in the fuel injection amount with high accuracy when the fuel injection amount is increased toward the value corresponding to the accelerator depression amount ACCP after being once reduced for the torque control. Thus, when the fuel injection amount is increased after being once reduced as described above, the boost pressure is increased with a delay to a value suited for the increased fuel injection amount, resulting in a reduction in the boost pressure at the end of shifting. The reduction in the boost pressure makes it impossible to ensure an amount of the air required for combustion of the fuel injected in the increased fuel injection amount. Consequently, the fuel injected into the combustion chamber 38 is not completely burned out but some of the fuel remains unburned and is turned into particulates, inevitably resulting in an increase in the amount of particulates in the exhaust gas.

To solve the above problems, according to the fourth embodiment, the injection pressure command value PFt, injection timing command value IAt and the VNT opening command value VAt are calculated based on the accelerator depression amount ACCP (the power requirement) and others, rather than the fuel injection amount command value Qfin and others, during shifting of the transmission 80.

More specifically, the output torque that would be obtained based on the current accelerator depression amount ACCP (the power requirement) in a normal engine operation is calculated as estimated torque Te, based on the accelerator depression amount ACCP and the engine speed NE. The estimated torque Te thus calculated is kept substantially constant, as indicated by the broken line in FIG. 12C, when the fuel injection amount is temporarily reduced. The injection pressure command value PFt, injection timing command value IAt and the VNT opening command value VAt are calculated based on the estimated torque Te and the engine speed NE.

As a result, the injection pressure command value PFt is kept substantially constant, as indicated by the thick solid line in FIG. 12F, in accordance with the estimated torque Te and others. Also, the injection timing command value IAt is kept substantially constant, as indicated by the thick solid line in FIG. 12G, in accordance with the estimated torque Te and others. Furthermore, the VNT opening command value VAt is kept substantially constant, as indicated by the thick solid line in FIG. 12H, in accordance with the estimated torque Te and others.

Accordingly, when the fuel injection amount is temporarily reduced during shifting of the transmission 80, the supply pump 49 and the relief valve 52 are not driven in such directions as to temporarily reduce the injection pressure in response to the temporary reduction of the fuel injection amount, but are kept substantially constant, and the injection pressure is accordingly kept substantially constant as shown in FIG. 12F. When the fuel injection amount is increased from the temporarily reduced value to the value corresponding to the accelerator depression amount ACCP (the power requirement), the injection pressure does not suffer from a response delay that would occur if the injection pressure were increased in response to the increase of the fuel injection amount. Thus, since the injected fuel is atomized under the injection pressure corresponding to the fuel injection amount, incomplete combustion of fuel particles or formation of unburned fuel particles will be prevented, and an otherwise possible increase in the amount of particulates in the exhaust gas will be suppressed or avoided.

Also, when the fuel injection amount is temporarily reduced during shifting of the transmission 80, the timing of injection by the fuel injector 46 is kept substantially constant as shown in FIG. 12G. Therefore, when the fuel injection amount is increased from the temporarily reduced value to the value corresponding to the accelerator depression amount ACCP (the power requirement), the injection timing does not suffer from a response delay that would occur if the injection timing were advanced in response to the increase of the fuel injection amount. Accordingly the fuel is injected in the injection timing suited for the fuel injection amount, thus assuring improved fuel economy. Also, while the ignition timing need be excessively advanced at a low load based on a map for preventing misfire, such an excessively advanced region need not be used according to the present embodiment, and therefore combustion noise can be reduced.

When the fuel injection amount is temporarily reduced during shifting of the transmission 80, the nozzle vanes 59 are not driven in such a direction as to temporarily reduce the boost pressure in accordance with the reduction of the fuel injection amount, but the opening angles of the nozzle valves 59 are kept substantially constant. As a result, the boost pressure is kept substantially constant as shown in FIG. 12H. When the fuel injection amount is increased from the temporarily reduced value to the value corresponding to the accelerator depression amount ACCP (the power requirement), therefore, the boost pressure does not suffer from a response delay that would occur if the boost pressure were increased in response to the increase of the fuel injection amount. Thus, since the air for use in combustion of fuel is supplied to the combustion chamber 38 under the boost pressure commensurate to the fuel injection amount, the required amount of intake air of the diesel engine 31, which is determined in relation to the fuel injection amount, is sure to be supplied, and the fuel is prevented from remaining unburned. Consequently, an otherwise possible increase in particulates in the exhaust gas can be suppressed or avoided.

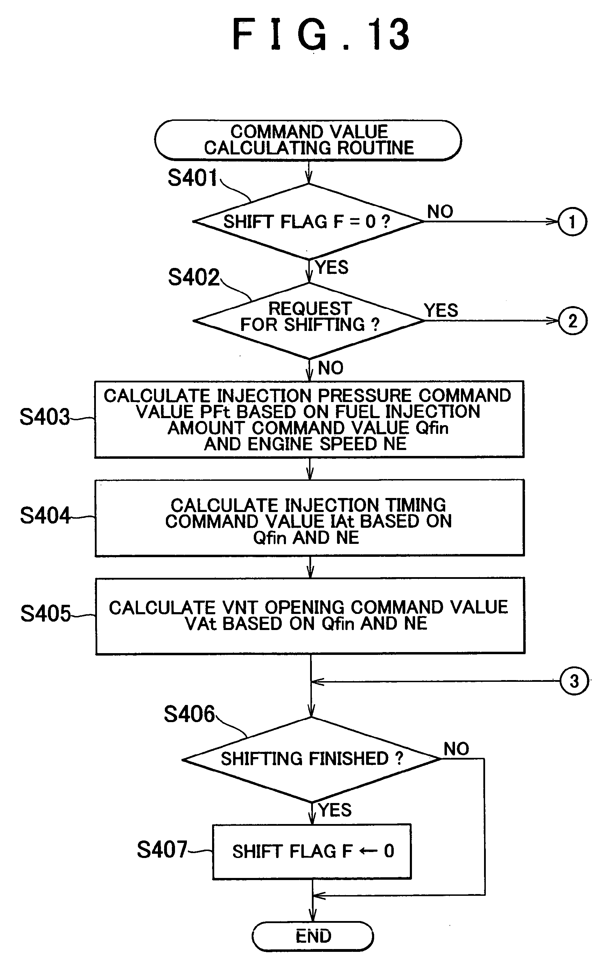

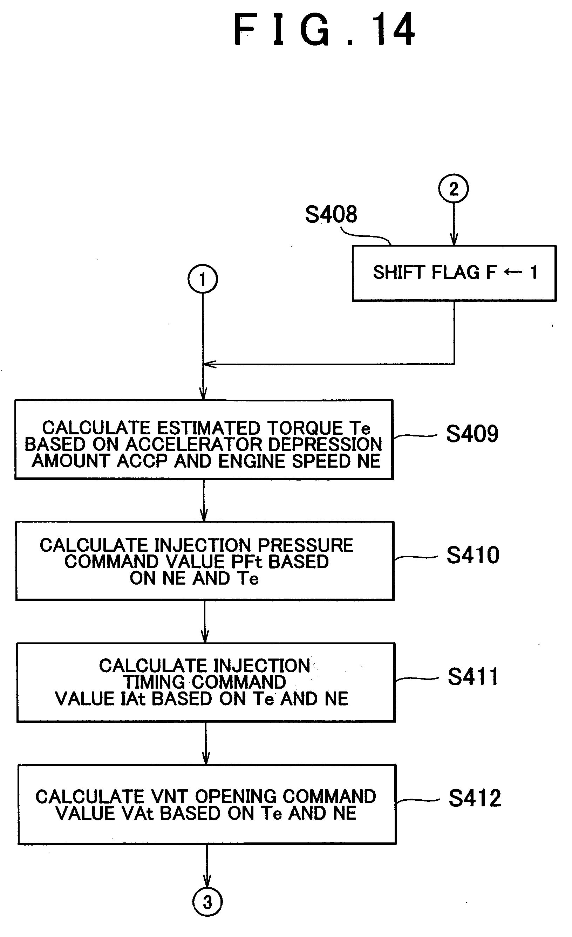

Next, a procedure of calculating the injection pressure command value PFt, the injection timing command value IAt and the VNT opening command value VAt will be explained with reference to the flowchart of FIG. 13 and FIG. 14 which shows a command value calculating routine. This command value calculating routine is executed by the ECU 72, for example, at predetermined time intervals.

In the command value calculating routine, it is determined in step S401 whether a shift flag F used for determining whether the transmission 80 is in the progress of shifting is set at 0 (which indicates that the transmission 80 is not in the process of shifting), and it is determined in step S402 whether a request for shifting of the transmission 80 is present. If the shift flag F is set at 0 (YES in step S401 of FIG. 13), and no request for shifting is present (NO in step S402), the injection pressure command value PFt is calculated in step S403 in a normal manner, based on the fuel injection amount command value Qfin and the engine speed NE. Subsequently, the injection timing command value IAt is calculated in step S404 in a normal manner, based on the fuel injection amount command value Qfin and the engine speed NE. Also, the VNT opening command value VAt is calculated in step S405 in a normal manner, based the fuel injection amount command value Qfin and the engine speed NE.

In the command value calculating routine of FIG. 13, if an affirmative determination is made in step S402, namely, if it is determined that a request for shifting of the transmission 80 is present, the control process proceeds to step S408 (FIG. 14) to set the shift flag F to "1" (which indicates that the transmission 80 is in the process of shifting), and then steps S409 through S412 are executed. If the shift flag F is set to "1", a negative determination is made in step S401 (FIG. 13) in subsequent control cycles, and the control process proceeds to steps S409 through S412. Thus, during shifting of the transmission 80, the process of steps S409 through S412 is carried out.

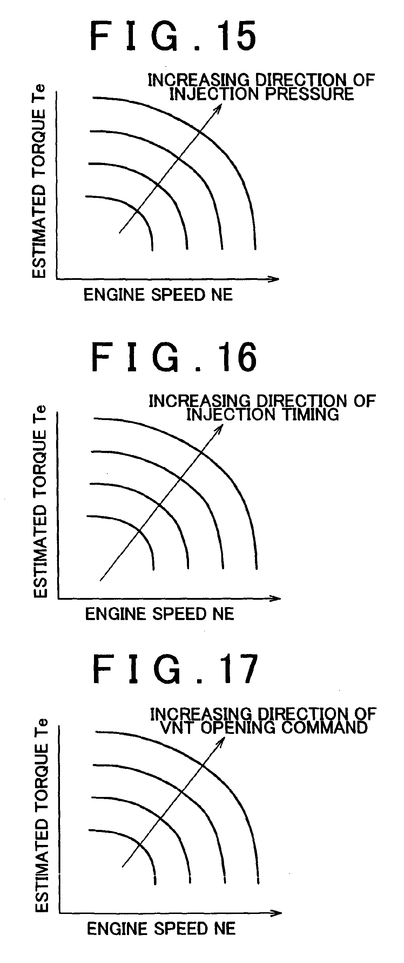

In this process, the estimated torque Te is calculated in step S409, based on the accelerator depression amount ACCP and the engine speed NE. In step S410, the injection pressure command value PFt is calculated based on the engine speed NE and the estimated torque Te with reference to, for example, the map of FIG. 15. As shown in FIG. 15, under a condition that the engine speed NE is constant, for example, the injection pressure command value is increased as the estimated torque Te increases, and is reduced as the estimated torque Te decreases.

In step S411, the injection timing command value IAt is calculated based on the engine speed NE and the estimated torque Te with reference to, for example, the map of FIG. 16. As shown in FIG. 16, under a condition that the engine speed NE is constant, for example, the injection timing command value IAt is advanced as the estimated torque Te increases, and is retarded as the estimated torque Te decreases.

In step S412, the VNT opening command value VAt is calculated based on the engine speed NE and the estimated torque Te with reference to, for example, the map of FIG. 17. As shown in FIG. 17, under a condition that the engine speed NE is constant, for example, the VNT opening command value is increased as the estimated torque Te increases, and is reduced as the estimated torque Te decreases.

Thus, during shifting of the transmission 80, the injection pressure command value PFt, injection timing command value IAt and the VNT opening command value VAt are calculated based on the accelerator depression amount ACCP and other parameter(s), instead of the fuel injection amount command value Qfin and other parameter(s).

After the process of steps S409 through S412 is executed, the control process proceeds to step S406 (FIG. 13) to determine whether shifting of the transmission 80 is finished. If an affirmative determination is made in step S406, the shift flag F is set to "0" (which indicates the transmission 80 is not in the process of shifting) in step S407.

The fourth embodiment as described above in detail provides the following effects.
(1) When the fuel injection amount command value Qfin is temporarily reduced irrespective of the accelerator depression amount ACCP (indicative of the power requirement) during shifting of the transmission 80, the injection pressure command value PFt, injection timing command value IAt and the VNT opening command value VAt are calculated based on the estimated torque Te obtained from the accelerator depression amount ACCP, and other parameter(s). The estimated torque Te is a theoretical output torque obtained in a normal engine operation from the accelerator depression amount ACCP detected during shifting of the transmission 80. Since the output torque of the diesel engine 11 varies depending upon the fuel injection amount, the estimated torque Te corresponds to the fuel injection amount that depends upon the accelerator depression amount ACCP (the power requirement) detected at the time of shifting of the transmission 80. By controlling the supply pump 49 and the relief valve 52 based on the injection pressure command value PFt obtained from the estimated torque Te, for example, the injection pressure is prevented from being temporarily reduced even if the fuel injection amount command value Qfin is temporarily reduced during shifting of the transmission 80. Accordingly the injection pressure does not suffer from a response delay that would occur if the injection pressure were increased in response to the subsequent increase in the fuel injection amount command value Qfin from the reduced value. At the end of shifting of the transmission 80, therefore, the injected fuel is atomized under the injection pressure commensurate to the fuel injection amount, so that fuel particles do not remain unburned but are completely burned out, and an otherwise possible increase in the amount of particulates in the exhaust gas can be suppressed or avoided.
(2) When the fuel injection amount is temporarily reduced during shifting of the transmission 80, the injection timing is prevented from being temporarily retarded in response to the reduction of the fuel injection amount command value Qfin. Therefore, the fuel is injected in the injection timing suitable for the increased fuel injection amount at the end of shifting, thus assuring improved fuel economy. Also, while the injection timing need be greatly advanced at a low load based on a map for preventing misfire, such an excessively advanced region need not be used according to the present embodiment, and therefore combustion noise can be reduced.
(3) When the fuel injection amount is temporarily reduced during shifting of the transmission 80, the boost pressure is prevented from being temporarily reduced in response to the reduction of the fuel injection amount command value Qfin. As a result, the air used for combustion of fuel is supplied to the combustion chamber 38 under the boost pressure commensurate to the increased fuel injection amount at the end of shifting. Therefore, the required amount of intake air that is determined in relation to the fuel injection amount can be surely drawn into the combustion chamber 38, and the fuel does not remain unburned, thus suppressing an otherwise possible increase in the amount of particulates in the exhaust gas.

### Fifth Embodiment

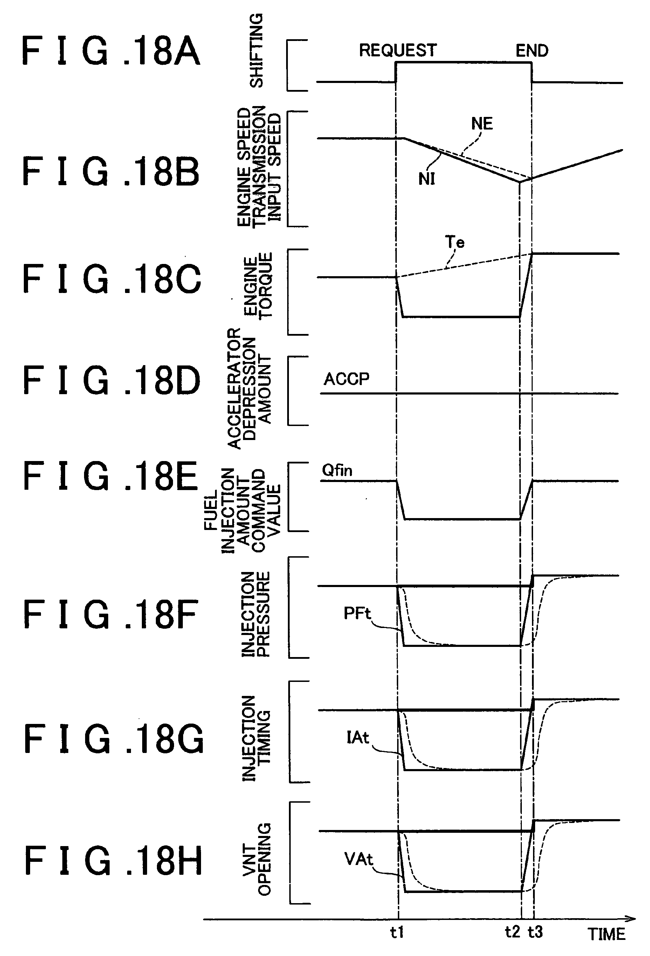

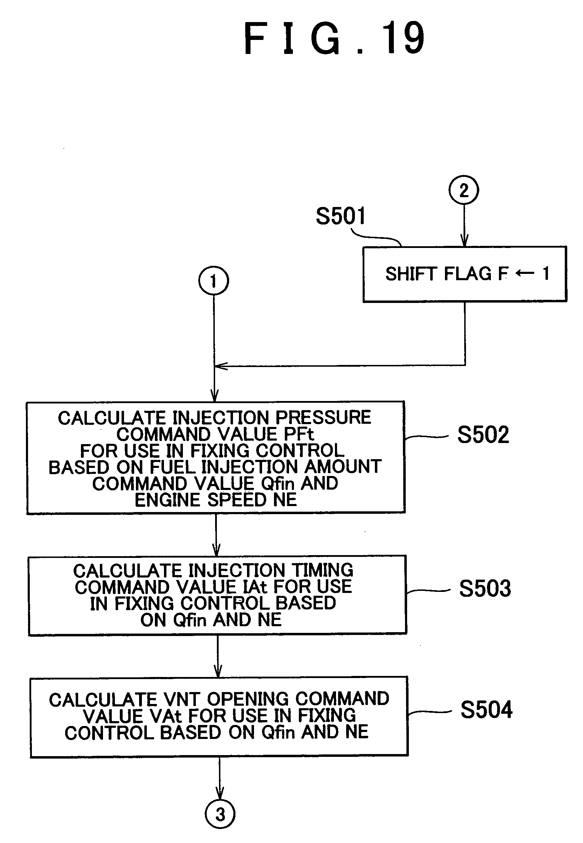

Next, the fifth embodiment of the invention will be described with reference to FIG. 18 and FIG. 19.

In this embodiment, fixing control for fixing the operating states of the supply pump 49 and the relief valve 52 to the states immediately before shifting is performed during shifting of the transmission 80. Also, fixing control for fixing the injection timing of the fuel injector 46 to the timing immediately before shifting is performed, and fixing control for fixing the VNT opening of the nozzle vanes 59 of the variable-nozzle turbocharger 54 to the value immediately before shifting is performed, during shifting of the transmission 80.

With the above fixing control, the supply pump 49 and the relief valve 52 are not driven in such directions as to reduce the injection pressure even when the fuel injection amount command value Qfin is temporarily reduced during shifting of the transmission 80. Also, the injection timing of the fuel injector 46 is not controlled to be retarded, and the VNT opening of the nozzle vanes 59 of the variable-nozzle turbocharger 54 is not controlled to be reduced, during shifting of the transmission 80.

Accordingly, the injection pressure does not suffer from a response delay that would occur if the injection pressure were increased in response to the subsequent increase of the fuel injection amount command value Qfin from the temporarily reduced value, and the otherwise possible reduction in the injection pressure due to the response delay is suppressed or avoided. Also, the injection timing does not suffer from a response delay that would occur if the injection timing were changed in response to the increase of the fuel injection amount command value Qfin from the reduced value. Furthermore, the VNT opening of the variable-nozzle turbocharger 54 does not suffer from a response delay that would occur if the VNT opening were changed in response to the increase of the fuel injection amount command value Qfin from the reduced value, and the otherwise possible reduction in the boost pressure due to the response delay is suppressed or avoided.

The above-described fixing control will be described in detail with reference to the time chart of FIG. 18A through FIG. 18H.

When a request for shifting of the transmission 80 is made at time t1, the injection pressure command value PFt, injection timing command value IAt and the VNT opening command value VAt are calculated based on the fuel injection amount command value Qfin and the engine speed NE. During shifting of the transmission 80, the injection pressure command value PFt is fixed to the thus calculated value, and is kept constant as indicated by the thick solid line in FIG. 18F, and the injection timing command value IAt is fixed to the calculated value, and is kept constant as indicated by the thick solid line in FIG. 18G. Also, the VNT opening command value VAt is fixed to the calculated value, and is kept constant as indicated by the thick solid line in FIG. 18H.

As a result, the operating states of the supply pump 49 and the relief valve 52 controlled based on the injection pressure command value PFt are kept constant, and the injection pressure is kept constant as indicated by the thick solid line in FIG. 18F. Also, the injection timing of the fuel injector 46 controlled based on the injection timing command value IAt is kept constant as indicated by the thick solid line in FIG. 18G. Furthermore, the VNT opening of the variable-nozzle turbocharger 54 controlled based on the VNT opening command value VAt is kept constant as indicated by the thick solid line in FIG. 18H.

When the fuel injection amount (the fuel injection amount command value Qfin) is temporarily reduced during shifting of the transmission 80, the injection pressure is kept constant, and is thus prevented from being lowered. Accordingly, when the fuel injection amount is increased from the temporarily reduced value toward a value corresponding to the accelerator depression amount ACCP (the power requirement) after time t2, the injection pressure does not suffer from a response delay that would occur if the injection pressure were increased in response to the increase of the fuel injection amount.

When the fuel injection amount is temporarily reduced during shifting of the transmission 80, the timing of fuel injection by the fuel injector 46 is kept constant, and is thus prevented from being retarded. Accordingly, when the fuel injection amount is increased from the temporarily reduced value toward the value corresponding to the accelerator depression amount ACCP (the power requirement) after time t2, the injection timing does not suffer from a response delay that would occur if the injection timing were advanced in response to the increase of the fuel injection amount.

When the fuel injection amount is temporarily reduced during shifting of the transmission 80, the VNT opening of the nozzle vanes 59 of the variable-nozzle turbocharger 54 is kept constant, and the nozzle vanes 59 are not driven in a direction to temporarily lower the boost pressure in accordance with the reduction of the fuel injection amount. As a result, the boost pressure is kept constant without being changed to a lower level. Accordingly, when the fuel injection amount is increased from the temporarily reduced value toward the value corresponding to the accelerator depression amount ACCP (the power requirement) after t2, the boost pressure does not suffer from a response delay that would occur if the boost pressure were increased in response to the increase of the fuel injection amount.

Next, a procedure of calculating the injection pressure command value PFt, injection timing command value IAt and the VNT opening command value VAt will be explained with reference to the flowchart of FIG. 19 showing a command value calculating routine according to the fifth embodiment. The command value calculating routine is executed by the ECU 72, for example, at predetermined time intervals. The command value calculating routine of this embodiment is difference from that of the fourth embodiment in that step S409 through step S412 (FIG. 14) in the command value calculating routine of the fourth embodiment are replaced by step S501 through step S504 as shown in FIG. 19.

In the command value calculating routine of the fifth embodiment, when a request for shifting of the transmission 80 is made, the shift flag F is set to "1" (which indicates that the transmission 80 is in the process of shifting) in step S501.

Subsequently, the injection pressure command value PFt for use in the fixing control is calculated in step S502 based on the fuel injection amount command value Qfin and the engine speed NE. The calculation of the injection pressure command value PFt is carried out immediately before shifting, and the injection pressure command value PFt is fixed to the thus calculated value during shifting of the transmission 80.

In step S503, the injection timing command value IAt for use in the fixing control is calculated based on the fuel injection amount command value Qfin and the engine speed NE. The calculation of the injection timing command value IAt is carried out immediately before shifting, and the injection timing command value IAt is fixed to the thus calculated value during shifting of the transmission 80.

In step S504, the VNT opening command value VAt for use in the fixing control is calculated based on the fuel injection amount command value Qfin and the engine speed NE. The calculation of the VNT opening command value VAt is carried out immediately before shifting, and the VNT opening command value is fixed to the thus calculated value during shifting of the transmission 80.

The fifth embodiment of the invention provides the following effects.
(4) During shifting of the transmission 80, fixing control for fixing the injection pressure command value PFt, injection timing command value IAt and the VNT opening command value VAt to the respective values obtained immediately before shifting is carried out. Therefore, the injection pressure is prevented from being temporarily reduced in accordance with the temporary reduction of the fuel injection amount command value Qfin, and is free from a response delay that would occur if the injection pressure were increased in response to the subsequent increase of the fuel injection command value Qfin from the reduced value. Accordingly, at the end of shifting of the transmission 80, the injected fuel is atomized under the injection pressure commensurate to the fuel injection amount, and fuel particles do not remain unburned but are completely burned out. Consequently, an otherwise possible increase in the amount of particulates in the exhaust gas can be suppressed or avoided.
(5) When the fuel injection amount is temporarily reduced during shifting of the transmission 80, the injection timing is prevented from being temporarily retarded in accordance with the temporary reduction of the fuel injection amount command value Qfin. Therefore, fuel is injected in the injection timing suitable for the fuel injection amount at the end of shifting, thus assuring improved fuel economy. Also, while the injection timing need be greatly advanced at a low load based on the map for preventing misfire, such an excessively advanced region need not be used according to the fifth embodiment, and therefore combustion noise can be reduced.
(6) When the fuel injection amount is temporarily reduced during shifting of the transmission 80, the boost pressure is prevented from being temporarily reduced in accordance with the temporary reduction of the fuel injection amount command value Qfin. Therefore, the air used for combustion of the fuel is supplied to the combustion chamber 38 under the boost pressure commensurate to the fuel injection amount at the end of shifting. Thus, the required amount of intake air, which is determined in relation to the fuel injection amount, can be drawn into the combustion chamber 38 of the diesel engine 31, and the fuel is prevented from remaining unburned, thus suppressing the otherwise possible increase in the amount of particulates in the exhaust gas.

### Sixth Embodiment

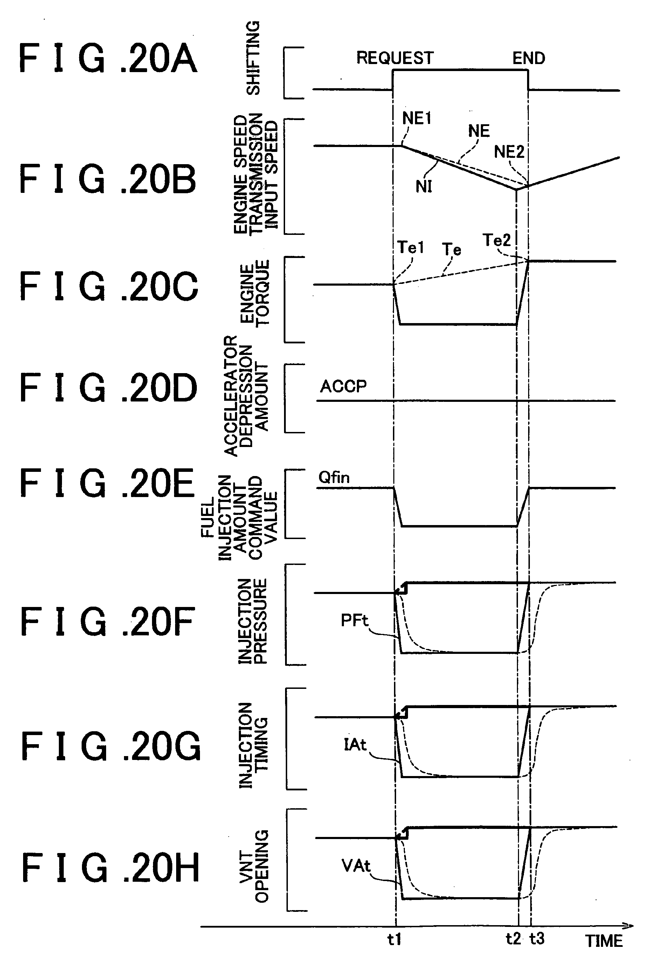

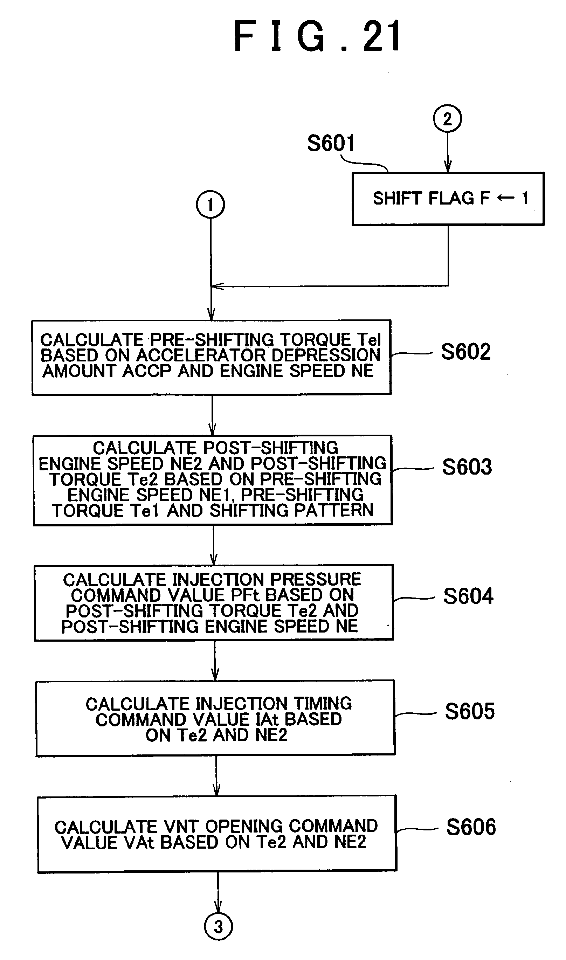

Next, a sixth embodiment of the invention will be described with reference to FIG. 20 and FIG. 21.

In this embodiment, during shifting of the transmission 80, the injection pressure command value PFt, injection timing command value IAt and the VNT opening command value VAt are calculated based on post-shifting torque Te2 that is estimated torque Te immediately after shifting, and post-shifting engine speed NE2 as engine speed NE immediately after shifting. By controlling the supply pump 49 and the relief valve 52 based on the injection pressure command value PFt, the supply pump 49 and the relief valve 52 are not driven in such directions as to reduce the injection pressure even when the fuel injection amount command value Qfin is temporarily reduced during shifting of the transmission 80. Also, the injection timing of the fuel injector 46 is not controlled to be retarded, and the VNT opening of the nozzle vanes 59 of the variable-nozzle turbocharger 54, which is controlled based on the VNT opening command value VAt, is not controlled to be reduced, during shifting of the transmission 80.

Accordingly the injection pressure does not suffer from a response delay that would occur if the injection pressure were increased in response to the subsequent increase of the fuel injection amount command value Qfin from the temporarily reduced value, and the injection pressure is prevented from being reduced due to the response delay. Also, the injection timing does not suffer from a response delay that would occur if the injection timing were changed in response to the increase of the fuel injection amount command value Qfin from the reduced value. Furthermore, the VNT opening does not suffer from a response delay that would occur if the VNT opening were changed in response to the increase of the fuel injection amount, and therefore the boost pressure is prevented from being reduced due to the response delay.

Here, calculation of the post-shifting torque Te2 and the post-shifting engine speed NE2, and control based on the injection pressure command value PFt, injection timing command value IAt and the VNT opening command value VAt which are obtained from the post-shifting torque and engine speed, will be explained with reference to the time chart of FIG. 20A-FIG. 20H.

When a request for shifting of the transmission 80 is made at time t1, estimated torque at this time is calculated as pre-shifting torque Te1, based on the accelerator depression amount ACCP (the power requirement) and the engine speed NE. Also, the engine speed NE detected at this time is used as pre-shifting engine speed NE1. The pre-shifting engine speed NE1 and the pre-shifting torque Te1 are multiplied by certain coefficients corresponding to the speed to which the transmission is shifted, to be thus converted into post-shifting engine speed NE2 as engine speed NE immediately after shifting, and post-shifting torque Te2 as estimated torque Te immediately after shifting.

The injection pressure command value PFt, injection timing command value IAt and the VNT opening command value VAt are calculated based on the post-shifting engine speed NE2 and the post-shifting torque Te2. During shifting of the transmission 80, the injection pressure command value PFt is set to the value calculated as described above, as indicated by the thick solid line in FIG. 20F, and the injection timing command value IAt is also set to the value calculated as described above, as indicated by the thick solid line in FIG. 20G. Also, the VNT opening command value VAt is set to the value calculated as described above, as indicated by the thick solid line in FIG. 20H. The supply pump 49 and the relief valve 52 are controlled based on the injection pressure command value PFt, and the fuel injector 46 is controlled based on the injection timing command value IAt, while the opening angle of the nozzle vanes 59 is controlled based on the VNT opening command value VAt.

The injection pressure command value PFt, injection timing command value IAt and the VNT opening command value VAt may be suddenly changed after time t1, as indicated by the thick solid lines in FIG. 20F, FIG. 20G and FIG. 20H, or may be gradually changed after t1, as indicated by the thick broken lines in FIG. 20F, FIG. 20G and FIG. 20H.

While the fuel injection amount (fuel injection amount command value Qfin) is temporarily reduced during shifting of the transmission 80, the supply pump 49 and the relief valve 52 are controlled based on the injection pressure command value PFt obtained from the post-shifting torque Te2 and other parameter(s). Therefore, the supply pump 49 and the relief valve 52 are not driven in such directions as to reduce the injection pressure in accordance with the temporary reduction of the fuel injection amount, and the injection pressure is kept substantially constant as indicated by the thick solid line in FIG. 20F. Accordingly, when the fuel injection amount is increased from the temporarily reduced value toward the value corresponding to the accelerator depression amount ACCP (the power requirement) after time t2, the injection pressure does not suffer from a response delay that would occur if the injection pressure were increased in response to the increase of the fuel injection amount.

Also, when the fuel injection amount is temporarily reduced during shifting of the transmission 80, the fuel injector 46 is controlled based on the injection timing command value IAt obtained from the post-shifting torque Te2 and other parameter(s), and therefore the timing of fuel injection by the fuel injector 46 is not retarded but kept constant during shifting of the transmission 80. Accordingly, when the fuel injection amount is increased from the temporarily reduced value toward the value corresponding to the accelerator depression amount ACCP (the power requirement) after time t2, the injection timing does not suffer from a response delay that would occur if the ignition timing were advanced in response to the increase of the fuel injection amount.

Furthermore, when the fuel injection amount is temporarily reduced during shifting of the transmission 80, the nozzle vanes 59 are controlled based on the VNT opening command value VAt obtained from the post-shifting torque Te2 and other parameter(s), and therefore the boost pressure is not lowered but kept constant during shifting of the transmission 80. Accordingly, when the fuel injection amount is increased from the temporarily reduced value toward the value corresponding to the accelerator depression amount ACCP (the power requirement) after time t2, the boost pressure does not suffer from a response delay that would occur if the boost pressure were increased in response to the increase of the fuel injection amount.

Next, a procedure of calculating the injection pressure command value PFt, injection timing command value IAt and the VNT opening command value VAt will be explained with reference to FIG. 21 showing a command value calculating routine. The command value calculating routine of this embodiment is different from that of the fourth embodiment in that step S409 through step S412 (FIG. 14) in the command value calculating routine of the fourth embodiment are replaced by step S601 through step S606 shown in FIG. 21.

In the command value calculating routine of the sixth embodiment, when a request for shifting of the transmission 80 is made, the shift flag F is set to "1" (which indicates that the transmission 80 is in the process of shifting) in step S601, and then the injection pressure command value PFt, injection timing command value IAt and the VNT opening command value VAt are calculated in steps S602 - S606, based on the post-shifting torque Te2 and other parameter(s).

More specifically, the pre-shifting torque Tc1 is calculated in step S602 based on the accelerator depression amount ACCP and the engine speed NE. In step S603, the post-shifting engine speed NE2 and the post-shifting torque Te2 are calculated based on the pre-shifting engine speed NE1, pre-shifting torque Te1 and the shift pattern that indicates the speed to which the transmission 80 is to be shifted.

In step S604, the injection pressure command value PFt is calculated based on the post-shifting torque Te2 and the post-shifting engine speed NE2. In step S605, the injection timing command value IAt is calculated based on the post-shifting torque Te2 and the post-shifting engine speed NE2. In step S606, the VNT opening command value VAt is calculated based on the post-shifting torque Te2 and the post-shifting engine speed NE2.

The sixth embodiment of the invention provides the following effects.
(7) When the fuel injection amount command value Qfin is temporarily reduced irrespective of the accelerator depression amount ACCP (indicative of the power requirement) during shifting of the transmission 80, the injection pressure command value PFt, injection timing command value IAt and the VNT opening command value VAt are calculated based on the post-shifting torque Te2 as the estimated torque immediately after shifting, and other parameter(s). The post-shifting torque Te2 is predicted or estimated from the pre-shifting estimated torque Te1 obtained from, e.g., the accelerator depression amount ACCP (the power requirement) immediately before shifting, the shift pattern of the transmission 80, and so forth. Since the output torque of the diesel engine 31 varies with the fuel injection amount, the post-shifting torque Te2 corresponds to the fuel injection amount immediately after shifting of the transmission 80, which is determined depending upon the accelerator depression amount ACCP. By controlling the supply pump 49 and the relief valve 52 based on the injection pressure command value PFt obtained from, e.g., the post-shifting torque Te2, therefore, the injection pressure is prevented from being temporarily reduced even when the fuel injection amount command value Qfin is temporarily reduced during shifting of the transmission 80. Accordingly, the injection pressure does not suffer from a response delay that would occur if the injection pressure were increased in response to the increase of the fuel injection amount command value Qfin from the reduced value. Consequently, the injected fuel is atomized due to the injection pressure commensurate to the fuel injection amount at the end of shifting of the transmission 80, and therefore fuel particles do not remain unburned but are completely burned out, thus suppressing an otherwise possible increase in the amount of particulates in the exhaust gas.
(8) When the fuel injection amount is temporarily reduced during shifting of the transmission 80, the injection timing is prevented from being temporarily retarded in response to the reduction of the fuel injection amount. Therefore, fuel is injected in the injection timing suitable for the fuel injection amount at the end of shifting of the transmission 80, thus assuring improved fuel economy. Also, while the injection timing need be greatly advanced at a low load based on a map for preventing misfire, such an excessively advanced region need not be used according to the present embodiment, and therefore combustion noise can be advantageously reduced.
(9) When the fuel injection amount is temporarily reduced during shifting of the transmission, the boost pressure is prevented from being temporarily reduced in response to the reduction of the fuel injection amount. Therefore, air used for combustion of fuel is supplied to the combustion chamber 38 under the boost pressure commensurate to the fuel injection amount at the end of shifting of the transmission 80. Thus, the required amount of intake air, which is determined in relation to the fuel injection amount, is surely supplied to the combustion chamber 38 of the diesel engine 31, and fuel is prevented from remaining unburned, thus suppressing an otherwise possible increase in the amount of particulates in the exhaust gas.

### Seventh Embodiment

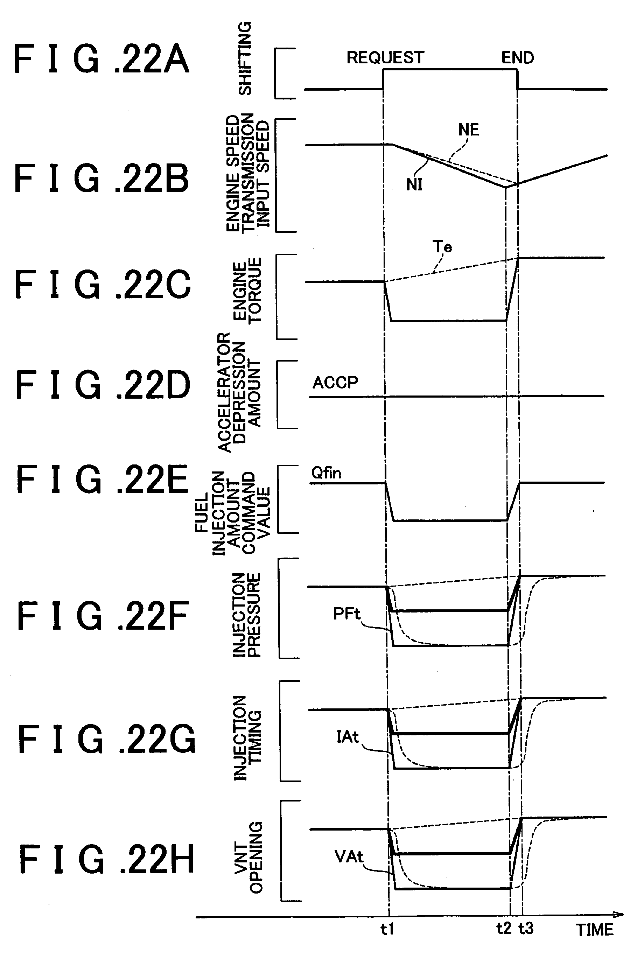

Next, a seventh embodiment of the invention will be described with reference to FIG. 22.

The construction of the diesel engine 31 used in this embodiment is similar to that of the fourth embodiment. In this embodiment, during shifting of the transmission 80, the injection pressure command value PFt, injection timing command value IAt and the VNT opening command value VAt are calculated based on an intermediate value between estimated torque Te obtained from the accelerator depression amount ACCP (the power requirement) in a normal engine operation, and engine torque based on the actual fuel injection amount.

With the above control, the injection pressure command value PFt varies as indicated by the thick solid line in FIG. 22F, and the injection timing command value IAt varies as indicated by the thick solid line in FIG. 22G. Also, the VNT opening command value VAt varies as indicated by the thick solid line in FIG. 22H.

During shifting of the transmission 80, the supply pump 49 and the relief valve 52 are controlled based on the injection pressure command value PFt indicated by the thick solid line in FIG. 22F, and the fuel injector 46 is controlled based on the injection timing command value IAt indicated by the thick solid line in FIG. 22G. Also, the nozzle vanes 59 are controlled based on the VNT opening command value VAt indicated by the thick solid line in FIG. 22H.

The present embodiment provides effects similar to those as described above in paragraphs (1) through (3) with respect to the fourth embodiment. In the fourth embodiment, the injection pressure command value PFt, injection timing command value IAt and the VNT opening command value VAt are calculated based on, e.g., the estimated torque Te obtained from the accelerator depression amount ACCP, during shifting of the transmission 80, and therefore these values PFt, IAt and VAt may be corrected to excessively large extents. In the seventh embodiment, on the other hand, the injection pressure command value PFt, injection timing command value IAt and the VNT opening command value VAt are calculated based on the intermediate value between the estimated torque Te obtained from the accelerator depression amount ACCP and the engine torque based on the actual fuel injection amount. Therefore, the injection pressure, the injection timing and the boost pressure can be controlled to target values within a short time after completion of shifting of the transmission 80.

The fourth through seventh embodiments as described above may be modified, for example, in the following manners.
(a) While the transmission 80 is able to perform shifting in the automatic mode and shifting in the manual mode in each of the illustrated embodiments, a transmission that performs shifting in only one of these two modes may be employed instead of the transmission 80.
(b) In the fourth embodiment, the injection pressure command value PFt, the injection timing command value IAt and the VNT opening command value VAt are calculated based on the estimated torque Te obtained from, e.g., the accelerator depression amount ACCP during shifting of the transmission 80. However, the invention is not limited to this arrangement. For example, the injection pressure command value PFt, the injection timing command value IAt and the VNT opening command value VAt may be calculated based on the accelerator depression amount ACCP and the engine speed NE, during shifting of the transmission 80.
(c) In the seventh embodiment, the injection pressure command value PFt, the injection timing command value IAt and the VNT opening command value VAt are calculated based on the intermediate value between the estimated torque Te obtained from, e.g., the accelerator depression amount ACCP, and the engine torque based on the actual fuel injection amount, during shifting of the transmission 80. However, the estimated torque Te may be replaced by the engine torque immediately before shifting, as used in the fifth embodiment, or may be replaced by the engine torque immediately after shifting, as used in the sixth embodiment.
(d) In each of the illustrated embodiments, only one or two of the injection pressure, the injection timing and the boost pressure may be controlled during shifting of the transmission. For example, the control according to the invention may be performed with respect to a combination of the injection pressure and the injection timing, or a combination of the injection timing and the boost pressure, or a combination of the injection pressure and the boost pressure.
(e) While the invention is applied to the diesel engine equipped with the common rail and the turbocharger in each of the illustrated embodiments, the invention may be applied to a diesel engine that is not equipped with one of the common rail and the turbocharger.

A control system for an internal combustion engine (1) is provided which controls a fuel injection amount depending upon power requirement for the engine, and controls EGR amount adjusting means (12, 13) for adjusting an amount of exhaust gas recirculated from an exhaust passage (6) to an intake passage (2), based on the fuel injection amount. The control system includes clutch control means (15) for releasing and engaging a clutch mechanism (10) disposed between the engine and a transmission (9) upon shifting of the transmission, and torque control means (14) for reducing an engine output torque by temporarily reducing the fuel injection amount irrespective of the power requirement during shifting of the transmission. The control system further includes EGR control means (14) for controlling the EGR amount adjusting means based on the power requirement, instead of the fuel injection amount, during shifting of the transmission.

## Claims

1. A control system for an internal combustion engine (1) installed on a vehicle, which controls a fuel injection amount depending upon power requirement for the internal combustion engine, and controls EGR amount adjusting means (12, 13) for adjusting an amount of exhaust gas recirculated from an exhaust passage (6) of the engine to an intake passage (2) thereof, based on the fuel injection amount, **characterized by** comprising:
clutch control means (15) for releasing and engaging a clutch mechanism (10) disposed between the internal combustion engine and a transmission (9) so that the engine and the transmission are automatically disconnected from and connected to each other, when the transmission is shifted from one speed to another speed;
torque control means (14) for reducing an engine output torque by temporarily reducing the fuel injection amount irrespective of the power requirement during shifting of the transmission; and
EGR control means (14) for controlling the EGR amount adjusting means based on the power requirement, instead of controlling the EGR amount adjusting means based on the fuel injection amount, during shifting of the transmission.

2. A control system according to claim 1, **characterized in that**, during shifting of the transmission, the EGR control means (14) calculates an estimated torque that is an output torque of the engine provided by a current operation of an accelerator pedal (16) in a normal engine operation, based on an accelerator operation amount that represents the magnitude of the power requirement for the engine, and controls the EGR amount adjusting means based on the estimated torque.

3. A control system for an internal combustion engine (1) installed on a vehicle, which controls a fuel injection amount depending upon power requirement for the internal combustion engine, and controls EGR amount adjusting means (12, 13) for adjusting an amount of exhaust gas recirculated from an exhaust passage (6) of the engine to an intake passage (2) thereof, based on the fuel injection amount, **characterized by** comprising:
clutch control means (15) for releasing and engaging a clutch mechanism (10) disposed between the internal combustion engine and a transmission (9) so that the engine and the transmission are automatically disconnected from and connected to each other, when the transmission is shifted from one speed to another speed;
torque control means (14) for reducing an engine output torque by temporarily reducing the fuel injection amount irrespective of the power requirement during shifting of the transmission; and
EGR control means (14) for performing fixing control to fix the EGR amount adjusting means to an operating state established immediately before shifting of the transmission, instead of controlling the EGR amount adjusting means based on the fuel injection amount, during shifting of the transmission.

4. A control system for an internal combustion engine (1) installed on a vehicle, which controls a fuel injection amount depending upon power requirement for the internal combustion engine, and controls EGR amount adjusting means (12, 13) for adjusting an amount of exhaust gas recirculated from an exhaust passage (6) of the engine to an intake passage (2) thereof, based on the fuel injection amount, **characterized by** comprising:
clutch control means (15) for releasing and engaging a clutch mechanism (10) disposed between the internal combustion engine and a transmission (9) so that the engine and the transmission are automatically disconnected from and connected to each other, when the transmission is shifted from one speed to another speed;
torque control means (14) for reducing an engine output torque by temporarily reducing the fuel injection amount irrespective of the power requirement during shifting of the transmission; and
EGR control means (14) for controlling the EGR amount adjusting means based on the engine output torque to be established immediately after shifting of the transmission, which torque is predicted from the power requirement for the engine and a shift pattern of the transmission, instead of controlling the EGR amount adjusting means based on the fuel injection amount, during shifting of the transmission.

5. A control system according to claim 4, **characterized in that**, during shifting of the transmission, the EGR control means calculates an estimated torque that is an output torque of the engine provided by an operation of an accelerator pedal (16) immediately before shifting in a normal engine operation, based on an accelerator operation amount that represents the magnitude of the power requirement, and predicts the engine output torque to be established immediately after shifting, based on the estimated torque and the shift pattern of the transmission.

6. A control system according to any one of claims 1-5, **characterized in that** the EGR amount adjusting means comprises at least one of an EGR valve (12) provided in an EGR passage (11) through which the exhaust gas flows from the exhaust passage into the intake passage, and a throttle valve (13) provided in the intake passage.

7. A control system according to claim 6, **characterized by** further comprising:
correcting means (14) for calculating a target intake air amount based on the fuel injection amount in a normal engine operation, and correcting an opening angle of at least one of the EGR valve (12) and the throttle valve (13) so that an actual intake air amount of the engine becomes close to the target intake air amount.

8. A control system according to claim 7, **characterized in that**, during shifting of the transmission, the correcting means calculates an estimated torque that is an output torque of the engine provided by a current operation of an accelerator pedal (16) in a normal engine operation, based on an accelerator operation amount that represents the magnitude of the power requirement for the engine, and corrects the opening angle of the at least one of the EGR valve and the throttle valve so that the actual intake air amount of the engine becomes close to the target intake air amount calculated based on the estimated torque.

9. A control system according to any one of claims 1-8, **characterized in that** the transmission is automatically shifted up or down depending upon an operating condition of the vehicle, and the EGR control means starts controlling the EGR amount adjusting means when a request for shifting of the transmission is made.

10. A control system according to any one of claims 1-8, **characterized in that** the transmission is shifted up or down according to a shifting operation of a driver of the vehicle, and the EGR control means starts controlling the EGR amount adjusting means when a request for shifting of the transmission is made.

11. A control system for a diesel engine (31), comprising (a) control means (72) for controlling a fuel injection amount depending upon power requirement for the diesel engine, and controlling adjusting means (46, 47, 54) for adjusting a quantity of state for optimizing a combustion state of the diesel engine, based on the fuel injection amount, (b) clutch control means (72) for releasing and engaging a clutch mechanism (82) disposed between the diesel engine and a transmission (80) so that the diesel engine and the transmission are automatically disconnected from and connected to each other, when the transmission is shifted from one speed to another speed, and (c) torque control means (72) for reducing an engine output torque by temporarily reducing the fuel injection amount irrespective of the power requirement during shifting of the transmission, **characterized by** further comprising:
shifting-time control means (72) for controlling the adjusting means based on the power requirement, instead of controlling the adjusting means based on the fuel injection amount, during shifting of the transmission.

12. A control system according to claim 11, **characterized in that**, during shifting of the transmission, the shifting-time control means calculates an estimated torque that is an output torque of the engine provided by a current operation of an accelerator pedal (65) in a normal engine operation, based on an accelerator operation amount that represents the magnitude of the power requirement for the diesel engine, and controls the adjusting means based on the estimated torque.

13. A control system for a diesel engine (31), comprising (a) control means (72) for controlling a fuel injection amount depending upon power requirement for the diesel engine, and controlling adjusting means (46, 47, 52) for adjusting a quantity of state for optimizing a combustion state of the diesel engine, based on the fuel injection amount, (b) clutch control means (72) for releasing and engaging a clutch mechanism (82) disposed between the diesel engine and a transmission (80) so that the diesel engine and the transmission are automatically disconnected from and connected to each other, when the transmission is shifted from one speed to another speed, and (c) torque control means (72) for reducing an engine output torque by temporarily reducing the fuel injection amount irrespective of the power requirement during shifting of the transmission, **characterized by** further comprising:
shifting-time control means (72) for performing fixing control to fix the adjusting means to an operating state established immediately before shifting of the transmission, instead of controlling the adjusting means based on the fuel injection amount, during shifting of the transmission.

14. A control system for a diesel engine (31), comprising (a) control means (72) for controlling a fuel injection amount depending upon power requirement for the diesel engine, and controlling adjusting means (46, 47, 52) for adjusting a quantity of state for optimizing a combustion state of the diesel engine, based on the fuel injection amount, (b) clutch control means (72) for releasing and engaging a clutch mechanism (82) disposed between the diesel engine and a transmission (80) so that the diesel engine and the transmission are automatically disconnected from and connected to each other, when the transmission is shifted from one speed to another speed, and (c) torque control means (72) for reducing an engine output torque by temporarily reducing the fuel injection amount irrespective of the power requirement during shifting of the transmission, **characterized by** further comprising:
shifting-time control means (72) for controlling the adjusting means based on the output torque of the diesel engine to be established immediately after shifting of the transmission, which torque is predicted from the power requirement for the diesel engine and a shift pattern of the transmission, instead of controlling the adjusting means based on the fuel injection amount, during shifting of the transmission.

15. A control system according to claim 14, **characterized in that**, during shifting of the transmission, the shifting-time control means calculates an estimated torque that is an output torque of the diesel engine provided by an operation of an accelerator pedal (65) immediately before shifting in a normal engine operation, based on an accelerator operation amount that represents the magnitude of the power requirement for the diesel engine, and predicts the engine output torque to be established immediately after shifting of the transmission, based on the estimated torque and the shift pattern of the transmission.

16. A control system according to any one of claims 11-15, **characterized in that** the adjusting means comprises at least one of an accumulator device (47) that stores an injection pressure of a fuel to be injected into the diesel engine, a fuel injector (46) operable to inject the fuel into the diesel engine, and a supercharger (54) operable to supply intake air to the diesel engine at a controlled boost pressure.

17. A control system according to any one of claims 11-16, **characterized in that** the transmission is automatically shifted up or down depending upon an operating condition of the vehicle, and the shifting-time control means starts controlling the adjusting means so as to adjust at least one of an injection pressure, injection timing and a boost pressure when a request for shifting of the transmission is made.

18. A control system according to any one of claims 11-16, **characterized in that** the transmission is shifted up or down according to a shifting operation of a driver of the vehicle, and the shifting-time control means starts controlling the adjusting means so as to adjust at least one of an injection pressure, injection timing and a boost pressure when a request for shifting of the transmission is made.
